(19) Europäisches Patentamt
European Patent Office
Office européen des brevets

(11) Publication number : **0 340 807 B1**

(12) # EUROPEAN PATENT SPECIFICATION

(45) Date of publication of patent specification : **28.10.92 Bulletin 92/44**

(51) Int. Cl.$^5$ : **F02D 41/40**

(21) Application number : **89110630.4**

(22) Date of filing : **06.09.83**

(54) **Method and Apparatus for Precisely Controlled Fuel Injection in Internal Combustion Engine.**

(30) Priority : **16.09.82 US 418688**

(43) Date of publication of application : **08.11.89 Bulletin 89/45**

(60) Publication number of the earlier application in accordance with Art. 76 EPC : **0 107 894**

(45) Publication of the grant of the patent : **28.10.92 Bulletin 92/44**

(84) Designated Contracting States : **DE FR GB IT**

(56) References cited :
**FR-A- 1 522 293**
**GB-A- 2 085 978**
**US-A- 297 982**
**US-A- 3 442 451**
**US-A- 3 827 409**
**US-A- 4 219 154**

(73) Proprietor : **BKM, INC.**
**5141 Santa Fe Street**
**San Diego California 92109 (US)**

(72) Inventor : **Beck, Neils J.**
**5141 Santa Fe Street**
**San Diego, CA 92109 (US)**
Inventor : **Calkins, Michael A.**
**5141 Santa Fe Street**
**San Diego, CA 92109 (US)**
Inventor : **Barkhimer, Robert L.**
**5141 Santa Fe Street**
**San Diego, CA 92109 (US)**
Inventor : **Goohs, Christian G.**
**5141 Santa Fe Street**
**San Diego, CA 92109 (US)**
Inventor : **Weseloh, William E.**
**5141 Santa Fe Street**
**San Diego, CA 92109 (US)**

(74) Representative : **Baillie, Iain Cameron et al**
**c/o Ladas & Parry, Altheimer Eck 2**
**W-8000 München 2 (DE)**

EP 0 340 807 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### 1. BACKGROUND OF THE INVENTION AND PRIOR ART

Internal combustion engines of the diesel type are characterized by their injection of a carefully premeasured charge of liquid fuel directly into the compression-heated air of a combustion chamber formed by the rapid, inward movement of a piston in its cylinder. There is no premixing of fuel and prior to injection.

This heterogenous mixture of fuel and air at the time of injection which occurs when the piston is near top-dead-center of its compression stroke, has created challenges for diesel engineers since the invention of the engine by Rudolf Diesel in the 1890's. These include the accurate control of beginning and ending of injection, the rate at which the fuel is injected, the shape and direction of the injection spray, and the formation and control of the hydraulic pressure under which the fuel is forced into the engine cylinder. A diesel fuel system, in addition to providing the correct volume of fuel charge at each injection for all speed and load conditions, must also control fuel delivery for cold starting of the engine, govern idle and maximum speeds, and have fail-safe features to prevent engine "runaway" from occurring.

A study of prior patent art and published literature provides a well documented record of the progress in diesel fuel injection systems. One reference in this area is Burman and DeLuca, Fuel Injection and Controls for Internal Combustion Engines; 1962, which contains an historical section listing fuel injection developments as described mostly by patent literature.

Other relevant technical references include the following papers:

1. K. Komiyama, Electronically Controlled High Pressure Injection System for Heavy Duty Diesel Engine - KOMPICS, Soc. of Auto Engrs. Paper No. 810997, 1981.
2. J. Akagi, A New Accumulator Fuel Injectio System for Direct Injection Diesel Engines, Soc. of Aut Engrs. Paper No. 821114, 1982.
3. Ralph J. Hooker, "Orion - A Gas Generator Turbocompound Engine", Transactions, Soc. of Auto Engrs Vol. 65, 1957, pps 15-17.

The above references offer background falling within the scope of this patent, namely accumulator-type injectors with pressure multipliers. A worthwhile summary of commercially available diesel fuel systems may be found in Robert Brady, Diesel Fuel Systems, Reston, 1981.

From the earliest days of diesel engines troubles were encountered with the fuel lines between the injection pump and nozzles. The unit injector combines the pump and nozzle, eliminates the high pressure lines, and thus offers a solution to the problem.

Many diesel engines are manufactured having a single cylinder, and the required fuel supply is then relatively simple. Nevertheless, in addition to the injector associated with the one cylinder, the entire fuel supply system includes numerous additional components. For multi-cylinder diesel engines the complete fuel supply system becomes relatively complex.

Fuel injectors are generally by far the most expensive component parts of a diesel engine. The reason is that they carry fuel pressures of many million of Pascal (thousands of psi), their mechanical operation occurs very rapidly, and in order to control both the quantity of the fuel charge and the timing of its injection with a desired level of precision, the mechanical parts of the injector mechanism itself must be manufactured with extremely precise tolerances.

In the diesel fuel injection systems currently in commercial use the controls for the system are essentially mechanical in nature. Many different mechanical arrangements have been used for controlling the fuel supply to the engine in order to satisfy the engine speed and load conditions.

Pertinent prior art United States patents include the following:

| | | |
|---|---|---|
| Eichelberg | No. 2,283,725 | 1942 |
| Falberg | No. 2,985,378 | 1961 |
| Links | No. 3,835,829 | 1974 |
| Luscomb | No. 4,219,154 | 1980 |

### 2. SUMMARY OF THE INVENTION

According to the present invention according to claim 1 or 10 a unit injector assembly is provided which not only operates at a very high pressure, injecting a fuel charge in an extremely fast and precise manner, but which also is supplied from a relatively low-pressure fuel supply source. The unit injector of the present invention includes a hydraulic pressure intensifier, an injector of the accumulator type, and a non-return valve coupling the output of the pressure intensifier with the accumulator injector.

Further, according to an embodiment the present invention the unit injector assembly also includes a three-way solenoid-controlled valve, which operates to admit the fuel charge to the intensifier. Thus, the solenoid valve, pressure intensifier, non-return valve, and accumulator type fuel injector are all contained in the unit injector assembly for convenient attachment to the cylinder head of a diesel engine.

Another important feature of the invention is that metering of the fuel charge is controlled, and adjusted as desired, without making any mechanical adjustments within the mechanism of the unit injector assembly. Instead, desired adjustments in the fuel charge to be metered are accomplished either hydraulically or electrically, or by a combination of hydraulic and electrical means.

The hydraulic control of the metering of the fuel charge is accomplished by adjusting the output pressure of a pump that is used as a common supply source for all injector assemblies associated with all cylinders of the engine. While an adjustment is made at the location of the pump, there is only one such adjustment for the entire engine, and it does not take place inside any of the unit injector assemblies.

Since the supply pressure is varied from time to time, it is not referred to as a "common rail" source.

When the control of the metering of the fuel charge is accomplished electrically, it is done simply by varying the time interval throughout which the solenoid valve is in the open position during each cycle of engine operation. Specifically, by keeping the solenoid valve open longer, the pressure level built up in the intensifier is greater, and the quantity of fuel charge delivered to the accumulator is increased. Conversely, by reducing the time interval throughout which the solenoid valve is open, the fuel charge may be decreased.

According to a further feature of an embodiment of the invention, control of the metering of the fuel charge is accomplished partly by hydraulic means and partly by electrical means. Specifically, where the invention is applied to a multi-cylinder engine, the main adjustment in the metering of the fuel is accomplished by adjusting the pressure of the common fuel supply source, while changes in the timing of the electrical control signals may be made differently for the different cylinders in order to equalize the performance of all cylinders and thus optimize the performance of the engine as a whole.

Another feature of an embodiment of the invention provides an ability to precisely control the time when fuel injection is to occur.

As a further feature of an embodiment of the invention, an improved control module is provided, in which a three-way solenoid valve and a pressure intensifier are contained in a single housing, having a number of improved features of structure and operation.

Still another feature of an embodiment of the present invention is the provision of an improved accumulator type fuel injector that is equipped with a non-return valve at its fuel input, and which incorporates various improvements in its structure and mode of operation.

Variations in line pressure because of inaccuracies of regulating components or failures of individual injectors are corrected automatically by the system. If a failure should occur such that fuel flow is reduced in a particular injector, the flow of fuel from the pressure regulator is reduced, maintaining the correct pressure and, consequently, the correct fuel delivery to the remaining combustion chambers. By varying the time interval throughout which the solenoid valve is in the open position during each cycle of engine operation. Specifically, by keeping the solenoid valve open longer, the pressure level built up in the intensifier is greater, and the quantity of fuel charge delivered to the accumulator is increased. Conversely, by reducing the time interval throughout which the solenoid valve is open, the fuel charge may be decreased.

The quantity of fuel injected and the pressure at which the fuel is injected into the chamber are controlled by selecting the volume of the accumulator chamber and controlling the maximum and minimum pressures of the injection process.

## 3. ADVANTAGES OF THE INVENTION

The invention provides a cost-effective, practical means for precise control and very high pressure fuel injection in internal combustion engines. Benefits which result from high pressure and precise control are improved fuel economy, lower exhaust emissions, reduced noise level, and reduced stress on injection-system components. Furthermore the system is very simple, and permits taking full advantage of the capabilities of present day electronic technology. A single electric signal to a unit injector results in the initiation of injection. Subsequently injection terminates without any additional signal. The termination function without a second signal is inherent in the system.

A particular advantage of the invention is that the size or quantity of the fuel charge injected is independent of the engine speed.

## 4. DRAWING SUMMARY

Figure 1 is a schematic drawing of a fuel injection system for a four-cylinder engine in accordance with the present invention;
Figure 2 is a schematic diagram illustrating the primary functional features of one of the unit injector assemblies;
Figure 3 is a side elevational view of a unit injector assembly in accordance with the present invention;
Figure 4 is a top plan view of the unit injector assembly of Figure 3;
Figures 5 and 6 are cross-sectional elevational views of the unit injector assembly taken on the respective cross-section lines indicated in Figure 4;
Figure 7 is an enlarged fragmentary cross-sectional view showing the T-valve in its closed position;
Figure 8 is an enlarged fragmentary cross-sectional view of the spray tip;
Figure 9 is an enlarged fragmentary portion of Figure 5a, but showing the intensifier pistons during their forward stroke and the T-valve in its open position;
Figure 10 is a partial view like Figure 9, but showing the alternate position of the solenoid valve;
Figure 11 shows the electrical pulse applied to the solenoid valve;
Figure 12 is a wave form diagram illustrating the operating cycle of the unit injector assembly of Figures 2 through 10; and
Figure 13 is an enlarged view of one portion of the wave form diagram of Figure 12.

## 5. SYSTEM ARRANGEMENT

(Figures 1 and 2)

Referring now to Figure 1, a complete fuel supply system for a four cylinder diesel engine is there illustrated in schematic form.

From a fuel supply tank 10, liquid fuel is drawn through a filter 11 by means of a pump 12 driven mechanically from the engine cam shaft 13 (not shown). Pump 12 is of the continuous flow type, generating a relatively continuous but adjustable pressure. From pump 12 the fuel is forced through a relief valve 14 to a pressure regulator 15. From regulator 15 the liquid fuel is supplied at a steady pressure to a fuel supply line 16, which is connected to all of the unit injector assemblies.

Four substantially identical unit injectors assemblies 100 are shown in accordance with their actual physical appearance. It will be understood that each unit injector assembly is mounted on the engine cylinder head for purpose of injecting fuel charges into the combustion chamber of the respectively associated cylinder of the engine.

Also shown in Figure 1 is a fuel return line 20. It serves as a drain from each of the unit injector assemblies 100.

Reference is now made to Figure 2 which schematically illustrates the structure and operation of an individual unit injector assembly 100. It should be noted that reference numerals smaller than 100 are used to identify the various features of the complete fuel injection system as shown in Figure 1. They are also used to identify the schematically represented parts of the unit injector assembly as shown in Figure 2. In the later drawing figures, where the actual mechanical construction of a unit injector assembly 100 is shown, the various parts are identified by reference numbers greater than 100.

As schematically shown in Figure 2, the unit injector assembly 100 receives its fuel supply at a pressure from the common fuel supply line 16. Fuel return line 20 leads from injector assembly 100. The fuel return line 20 is also known as a fuel drain line or a fuel return rail in the technology. The operation of the unit injector assembly is controlled by a three-way solenoid valve 30. The operation of the valve, in turn, is controlled by voltage pulses 36 received on the electrical control signal line 37. The unit injector assembly is mounted on the engine cylinder head, not shown. The function of the unit injector assembly is to inject fuel into a combustion chamber 80, shown in dotted lines, of an associated engine cylinder.

More specifically, the common fuel supply has a steady pressure level as shown by the small diagram 17. The electrical control signal for the solenoid valve consists of a series of substantially square-wave voltage pulses 36 as shown in the diagram. One voltage pulse is supplied during each cycle of the engine operation, as will later be explained in more detail.

The solenoid valve 30 has an inlet port 31 which receives fuel from the common fuel supply line 16. It also has a drain port 33. It also has an outlet port 32 to which the fuel return line 20 is coupled. Application of the leading edge of voltage pulse 36 acts to move the valve to the "on" condition so that there is fluid communication between inlet port 31 and the common outlet port 33. At the same time, there is no fluid communication with drain 32. Then when the voltage pulse ends, the valve is returned to its "off" position, in which fluid communication is between the common outlet port 33 and the fuel return port 32 and not with the fuel inlet port 31. It will be understood that solenoid-controlled three-way valves operating in this general fashion are previously known in the art.

Hydraulic intensifier 40 includes a low pressure chamber 45 and a high pressure chamber 50. The high pressure chamber 50 is also known as the compression or intensifying chamber. A metering duct 18 connects directly from the fuel supply line 16 through a check valve 19 to the compression chamber 50, so that a supply of fuel is always available to the compression chamber.

In the schematic diagram of Figure 2 a line 35 connected between common outlet port 33 of the solenoid valve and low pressure chamber 45 has arrows pointing in both directions. This line and its arrows schematically illustrate the operation by which fuel is alternately supplied from the valve into the low pressure chamber during one portion of each engine cycle, and then subsequently flows from that chamber back into the valve. More specifically, when the valve has been turned on by the voltage pulse 36 fuel flows from supply line 16 through inlet port 31 and hence through the interior of valve 30, its common outlet port 33, and into the low pressure chamber 45 of the intensifier. When the voltage pulse ends and the solenoid valve is turned off, the fuel in the low pressure chamber 45 then flows in the reverse direction to the common outlet port 33 of the valve, hence through the interior of the valve to drain port 32, and thence to the fuel drain or return line 20.

The low pressure chamber 45 of hydraulic intensifier 40 does not contain the fuel charge that is ultimately injected into the combustion chamber 80. Its only function is to multiply the pressure of the fuel within the compression intensifying chamber 50. The term multiply used in the sense of this invention is the ratio of the areas of the low and high pressure intensifier pistons. Thus, once during each engine cycle a quantity of fuel passes through the solenoid valve into the low pressure chamber 45, and the energy created by the flow of that quantity of fuel is then utilized to multiply the pressure of the fuel contained in high pressure chamber 50. When the potential energy stored in the accumulator has been converted to injection energy that quantity of fuel entering said chamber 45 is caused to drain off to the fuel return line 20. This operation is repeated during each cycle of the engine operation. The use of a hydraulic intensifier in a diesel fuel injection system is shown in the Luscomb patent number 4,219,154.

Accumulator injection nozzle 70 is shown as having two separate fuel inputs designated as 72 and 73. The fuel admitted into input 73 comes from compression chamber 50 via outlet port 51 and check valve 60 with its inlet port 52. Inlet 72 receives its fuel supply through circuit 53 which bypasses check valve 60. The quantity of fuel passing through this circuit is extremely small. On the schematic Fig. 2, the opposing arrows 54 and 55 on circuit 53 show that while two-directional flow is possible, the intention of this circuit 53 is more one of pressure communication.

During each cycle as the pressure in the compression chamber 50 is building up, the check valve 60 becomes biased in a forward direction and permits fuel to pass from the high pressure chamber 50 into the accumulator injector 70. By this means a fuel charge is admitted to the accumulator injector during each said cycle. When electrical pulse 36 ends, solenoid valve 30 closes, the pressure in low pressure chamber 45 drops, and the pressure in the high pressure chamber 50 also decreases rapidly. This cause check valve 60 to close, stopping the flow of fuel through that check valve into the accumulator. However, a fuel pressing coupling of limited effect still exists between the metering chamber 50 and the accumulator injector nozzle 70 by way of the pathway schematically illustrated by the line 53.

Discontinuance of the inflow of the fuel charge into accumulator injector 70 and the decrease in pressure in line 52 initiate injection of the fuel charge into the combustion chamber. The fuel enters chamber 80 as sprays 76 whose directions are determined by the orifices of spray tip 75.

The structure of the accumulator injector 70, and its mode of operation, including check valve 60 and the parallel pressure path 53, are generally similar to that shown in the Falberg patent number 2,985,378. However, as will be seen in connection with the description of the presently preferred embodiment of the invention, the accumulator injector of the invention does provide certain novel features which result in improved operation.

It will be understood that a hydraulic mechanism such as schematically illustrated in Figure 2 requires an initial priming with the supply liquid before it achieves a steady operating state. In the preceding description it has been assumed that the initial priming or start-up condition has already occurred, and that the device is operating in a steady state fashion.

By way of example, a typical pressure in the supply line 16 may be on the order of 103.4 bars. The multiplying effect of intensifier 40 may be fifteen or more, or as low as three. Therefore, the pressure in metering chamber 50 may be raised to about 1,550.9 bars (103.4 x 15 = 1,550.9), and this full pressure is transferred into the accumulator injection nozzle 70.

Reference is again made to Figure 1 showing the complete fuel supply system. An electrical control system such as a microprocessor 78 is used to control the operation of the fuel supply system. The microprocessor receives various input signals, and produces various output signals, as will now be described.

An input signal representing intake manifold air pressure of the engine is received on an input line 81. Another input signal representing cylinder block water temperature is received on an input line 82. Another input line 83 supplies an electrical signal whose magnitude represents the pressure level in the fuel supply line 16. Still another signal applied on input line 84 represents the position of the throttle, as established by the operator of the engine, or as per control governor to meet the required load conditions imposed on the engine. Since the microprocessor 78 must be synchronized with the engine, an electrical signal is acquired for example from cam shaft 13 for the purpose of timing or synchronizing a pulse generator 85 with the engine. Signals from the pulse generator 85 are supplied on an input line 86 to the microprocessor.

According to the present invention the microprocessor 78 carries out a timing cycle within which a series of events are timed and controlled, and the duration of that timing cycle may correspond to one revolution of the engine crankshaft, or to two or more crankshaft revolutions. In the case of a two-stroke cycle engine the timing cycle will ordinarily be carried out during one complete revolution of the engine crankshaft. For a four-stroke cycle engine, the timing cycle would ordinarily correspond to two revolutions of the engine crankshaft.

In accordance with the present invention, however, the fuel consumption may be reduced considerably for certain engine operating conditions by changing the timing. For example, a two-stroke cycle engine that is idling and not under load, might have the timing cycle as determined by the multiprocessor set to initiate an injection of fuel not at every revolution, but at every two, three or four engine revolutions. In similar fashion, for a four-stroke cycle engine, the timing circle of the microprocessor may be modified to correspond to an integral multiple of two engine revolutions. The operating cycle of the engine then corresponds to the timing cycle set by the microprocessor.

The desired timing cycle of the microprocessor may be carried out entirely within that unit of the system. Alternatively, the pulse generator 85 may, if desired, be programmed to act as a frequency multiplier, so that rather than generating merely one pulse for each revolution of the crankshaft, it will generate a series of pulses containing some predetermined number of evenly spaced pulses.

An output line 90 generates an electrical signal which is utilized for controlling the operation of pressure regulator 15. Adjusting the pressure setting of regulator 15 in turn causes the pressure on supply line 16 to either increase or decrease, and results in a corresponding change in the quantity of the fuel charge injected into the combustion chamber of each cylinder. The manner in which this pressure regulator control function is carried out, and its significance, are described later in greater detail.

The microprocessor 78 also has signal output lines 91a, 91b, 91c, and 91d. The output signal supplied from output line 91a controls the operation of unit injector assembly 100a, while output lines 91b, c and d control the injector assemblies 100b, c and d, respectively. Each output signal on one of the lines 91 consists of a square voltage wave (see pulse 36 of Fig. 2 which occurs once during each timing cycle of the microprocessor 78. When the square wave commences, the coil of solenoid valve 30 (Figure 2) of the associated injector assembly is energized. When the square wave of voltage (36) ends, the solenoid coil is de-energized.

The signals supplied to the output lines 91 provide three important timing functions for controlling the operation of the unit injector assemblies 100, and hence the operation of the diesel engine as a whole. These different timing functions will now be briefly identified.

One timing function, already mentioned, is to reduce the engine fuel consumption by making the timing cycle of the microprocessor, and hence the engine cycle, correspond to an integral multiple of the normal engine firing cycle.

A second important timing function of the microprocessor output signals is to establish the instant of time at which fuel injection into the combustion chamber will commence relative to the top dead center position of the associated piston. This particular timing function is controlled by the point at which the square wave of voltage ends, thus de-energizing the associated solenoid valve. This function is described in more detail later.

A third timing function of the microprocessor is to determine the duration of the time interval throughout which the solenoid valve is energized. The duration of that time interval may be increased by turning on the valve earlier, or may be decreased by turning it off earlier. This particular timing function affects the amount of pressure intensification that is attained by pressure intensifier 40 (Figure 2), and hence the quantity of each injected fuel charge, as will be described in greater detail later.

There is a fourth timing function which the microprocessor 78 may be called upon to perform. This timing function is to make individual adjustments for each cylinder of the engine in respect to the time when injection is to be commenced, and also in respect to the duration of the time interval through which the solenoid valve is turned on. This is a "fine tuning" function which is discussed in more detail in one of the last paragraphs of this description.

6. DETAILED DESCRIPTION OF THE MECHANICAL PARTS OF THE UNIT INJECTOR ASSEMBLY

This description is made with reference to drawing Figures 3 through 10 incisive, and includes numbered paragraphs.

Paragraph 1.

The solenoid unit 30, Fig. 3, is separately packaged. It is described in States Patent No. 4,391,292 issued at the U.S. Patent Office on July 5, 1983, which is under the same ownership as the present application. The solenoid unit is concentric about a central longitudinal axis, with certain exceptions. One exception is the lead wires 37 which connect at one part of the circumference of the energizing coil. Another exception is two transverse passageways 38, 39 (figs. 5a and 9) associated with respective ball valves 31a, 32a. As shown in these drawings they are aligned vertically, but that alignment is not required.

Paragraph 2.

The next part of the structure is the block or base member 110 for the control module. It is shown in Figures 3, 4, 5a, 6 and 9. As shown in Figure 5a the top opening 32 is the drain port. The opening at the left is the fuel supply port 31. There is also an opening on the righthand side where the solenoid unit 30 is inserted, with mating threads, and the solenoid is simply screwed in securely to hold it in place. Three O-rings aid the sealing of the solenoid in the block. A shoulder on solenoid valve body 35 bears against a shoulder 110a to locate the solenoid valve in the block 110. The fuel inlet opening 31 is concentric with the cavity in block 110 which receives the solenoid unit 30. Therefore, the incoming fuel flows directly against the end of the solenoid unit. Below the solenoid valve cavity there are three passages extending vertically downward. The opening at the extreme left as shown in Figure 5a is the metering duct 118. The opening in the middle is the common outlet port 33 coupled to the low pressure chamber of the hydraulic intensifier. The opening on the righthand side is a drain off line or passageway 120 for ensuring proper operation of the intensifier, as will be described later. Also formed in the block 110 are an annular opening 122 providing communication between transverse passage 38 and outlet passage 33, and annular opening 124 providing communication between transverse passage 39 and drain off line 120.

Paragraph 3.

In drain off line 120 there is a check valve 121, the detailed structure being like that of check valve 119 as shown in Figure 9. This structure includes a spring and a holding cap, the holding cap being retained by a press fit into an opening in block 110.

Paragraph 4.

Figure 6 shows a sectional view of the block or base member 110 for the control module, but at a 90 degree angle from Figure 5. Complete lubrication circuit for the control module as seen in Fig. 6 includes a lubrication port 125 at the top, a check valve 127 beneath the lubrication port, and a pair of ducts 128, 129 which lead to a large piston 130 and a small piston 140, respectively, of the intensifier. The lubricant circuit which is shown completely only in Figure 6 is an optional feature of the apparatus. Its function, in addition to reducing friction in the case of some fuels also serves to block leakage of fuel oil past the pistons 130 and 140.

Paragraph 5.

The large and small pistons 130 and 140 of the hydraulic intensifier are shown in Figures 5a, 6, 7 and 9. The large piston 130 is hollow, in the form of an inverted cup and moves axially in a cylindrical bore formed in a chamber 145. The small piston or rod 140 moves axially in its own bore. To avoid problems of concentricity and alignment, the two piston members are not fastened, but do remain in contact at substantially all times. The base member or block 110 contains the large bore 145 for the large piston 130 of the intensifier, and also an annular groove 128a spaced along the bore 145 which carries lubricating oil as previously mentioned.

Paragraph 6.

A smaller block 111 is positioned immediately beneath and firmly abutting the big block 110 of the control module. See Figures 5a, 6, 7 and 9. The axial bore 112 in which the rod or small piston reciprocates also contains its annular lubricating groove 129a as seen in the various Figures. Also contained in the block 111 as shown in Figure 5a are metering duct 118a and check valve 119. Duct 118a is aligned to communicate the duct 118 in block 110 with a chamber 150 below piston 140.

Paragraph 7.

The structural details of check valve 119 in the metering duct are shown in Figure 9.

Paragraph 8.

The chamber 150 beneath piston 140 constitutes a compression or intensifying chamber. See Figure 5a. A washer 151 is located at the bottom end of the compression chamber. There is a recess in block 111 concentric with the metering chamber but of wider diameter, and the washer fits in that recess. The washer has a central hole which is of somewhat lesser diameter than the compression chamber. The metering duct 118a converges into the compression chamber 150 immediately adjacent the washer.

Paragraph 9.

A dowel pin 155 clearly shown only in Figure 5a positively aligns the two blocks 110, 111 of the control module so that the two parts 118, 118a, of the metering duct are in full communication with each other. The same dowel pin 155 is of a length to also extend below the block 111 a short distance into the upper end of the main body of the accumulator 160. This dowel pin, in conjunction with another dowel pin to be described later, is necessary to establish the correct rotational position of the spray orifices relative to the longitudinal axis of the accumulator injector assembly.

Paragraph 10.

The parts which have now been briefly described are all of the component parts of the control module. A hex nut 157 which holds the two blocks 110 and 111 together is described below.

Paragraph 11.

Contained within a cylindrical bore at the upper end of the accumulator body 160 is a spring separator 170. The diameter of the bore holding this spring separator 170 is sized to tightly receive it and the end of the bore has a flat shoulder to permit the piece 170 to maintain an annular sealing contact. The length of this separator piece 170 is such that when inserted in its accumulator body cavity it is flush with the end surface of the body 160. Thus when the nut 157 clamps body 160 against the block 111 the spring separator 170 is rigidly fixed within the body 160 bearing as if it were an integral part of the accumulator body itself.

Paragraph 12.

A T-valve 180, smaller, but similar in shape to the spring separator 170 is shown in Figs. 5a, 7 and 9 loosely inserted within the separator piece 170 in an inverted position relative to piece 170. A radial clearance between the two pieces 170 and 180 of approximately 0.0254 cm. permits a downward flow of fuel around this T-valve. The top or end wall of this valve piece 180 has a central opening 185 to receive the upper end of a needle valve member 190. The diameter of this opening 185 is approximately 0.310 cm. Relative sliding occurs between the needle 190 and the T-valve 180, but the clearance between the two parts is kept to a minimum. On the upper surface of the T-valve, i.e., the bottom of the cup, there is a recess 187 which is clearly shown in Figures 5a, 7 and 9.

Paragraph 13.

It is important that the central hole 152 through the washer 151 be of smaller diameter than the upper end of the needle valve member 190 because the washer 151 acts as a stop or bumper for the member 190. It could not perform that function if the central opening were big enough to allow the needle valve to enter. Another size relationship is that of the depth of the recess 187 on the upper surface of the needle valve and the thickness of the washer 151. The recess depth must be less than the washer thickness to prevent the washer from becoming displaced from its recess due to the greater diameter of the recess 187 than the diameter of the washer 151. The reason for the large diameter of the recess 187 is that a relatively narrow lip is desired on the upper circumferential surface of the T-valve. The narrow lip 182 (Figure 7) ensures a high unit pressure when the T-valve is closed, and provides an effective seal with the bottom face of block 111. In the present embodiment the diameter of the entire T-valve is about 0.978 cm, while the radial thickness of the sealing lip is about 0.053 cm.

Paragraph 14.

A small spring 200 shown in Figures 5a, 7 and 9 works in conjunction with the T-valve as part of the same mechanism. This is a relatively light spring exerting a small force. Its lower end seats on the spring separator 170 while its upper end seats on the under surface of the horizontal wall of the T-valve member 180.

Paragraph 15.

Reference is now made to the needle valve member 190 as shown in Figures 5a, 5b, 7, 8 and 9. An accumulator tip 165 provides an extension of the lower end of accumulator body 160. Needle valve member 190 is an integral member extending almost the full length of the accumulator. A hemispherical surface 192 on the lower end of valve member 190 engages a hemispherical valve seat 166, as shown in Figure 8. The radius of the valve face 192 of the valve member 190 is kept slightly less than the radius of the valve seat 166 (of the order of 1% less). The needle valve member 190 is a rod of generally uniform diameter throughout its length, except for its lower end where the valve face 192 is formed, and an annular flange 195 (Fig. 5a) located near its upper end. It is essential, however, that the diameter of the needle valve member at the valve seat 166 is smaller than the diameter above the flange 195. See Figure 8 . This is necessary to create a net pressure loading on needle valve 190 for lifting the needle valve 190 off its seat when fuel injection is to commence. The length of the needle valve member relative to the accumulator body is also critical. That is, as shown in Figures 5a and 5b, when the valve member 190 is seated on its valve seat 166 at the lower extremity of the accumulator body, the upper end 194 of the needle valve member is spaced a short distance beneath the previously described washer 151. This distance is about 0.041 cm, in the presently preferred embodiment.

Paragraph 16.

Reference is now made to the bottom washer 205 seen only in Figure 5a. The accumulator body 160 has a change in the diameter of its internal opening at a point immediately below where the annular flange 195 of the needle valve member 190 is positioned. That change in diameter creates an annular shoulder 161 within the accumulator body. The bottom washer 205 rests on the annular flange 195 of the needle valve member. There is substantial clearance between the accumulator body 160 and the annular flange 195 of the valve member 190. A clearance is also maintained between the washer 205 and the accumulator body. This clearance is necessary in order to allow a downward flow of liquid fuel at all points around the circumference of the needle valve member, and of the washer.

Paragraph 17.

A large spring 210 shown in Figures 5a, 7 and 9 extends between the lower washer 205 and the spring separator 170. It normally holds the needle valve member against its seat. The large spring 210 has a much higher spring force than the small spring 200 associated with the T-valve. Spring 200 is small to reduce the pressure drop across the T-valve.

Paragraph 18.

The accumulator tip 165 of Figures 3 and 5b, is shown in an enlarged form in Figure 8 with its valve seat 166 and representative passages 177 acting as nozzle orifices for the fuel sprays 176.

Paragraph 19.

A lower dowel pin 167 is shown only in Figure 5b. It holds the tip 165 of the accumulator onto the accumulator body 160 in a predetermined rotational position, so that a correct alignment of the spray orifices is established.

Paragraph 20.

A lower hex nut 168 is shown in Figure 3, and in cross-section in Figure 5b. It works in a fashion similar to the upper and larger hex nut 157, but holds only two body members together rather than three.

The injector module is designed to be manufactured as a separate unit from the control module.

7. OPERATION OF THE SOLENOID VALVE

(Figures 5a, 9 and 10)

Referring to Figure 5a, the solenoid valve 30 has a coil winding 34 which receives one of the square wave voltage pulses 36 during each cycle of the engine operation. Energizing the coil 34 causes a solenoid plunger 34a to move a short distance to the left. The position of the plunger as shown in Figure 5a is its extreme righthand or outer position, and that is considered to be the closed position of the three-way valve.

With the plunger in the position shown in Figure 5a, liquid fuel which enters the port 31 cannot enter the interior of the solenoid valve, because it is stopped by a ball 31a which is seated on its valve seat. The supply pressure received at the inlet port 31 ensures that ball 31a will remain seated against its valve seat. Thus, there is no fluid communication between inlet port 31 and either the drain port 32 or the common outlet port 33.

Concurrently, the seated ball 31a through a plunger extension 34b holds ball 32a in its open position and away from its corresponding valve seat. Therefore, liquid fuel which may be present in the common outlet port 33 is free to flow through the annular space 122 of block 110, into transverse passageway 38 of the solenoid valve, longitudinally in the central core of the valve body and around the ball 32a. From that point on the fluid will flow into the transverse passageway 39 of the valve, then the annular space 124 in block 110 and hence to the fluid drain port 32. The fingers at four points around the circumference of ball 32a limit the movement of ball 32a as shown in Figure 5a. Hence, there are spaces between these fingers which permit the fluid to flow between transverse passage 38 and transverse passage 39 of the valve.

The open position with the solenoid valve energized is shown in Figure 9. Fuel entering port 31 now flows around the ball 31a into the transverse passageway 38, and through annular space 122 into common outlet port 33. At the same time, ball 32a is firmly seated on its respective valve seat, thus interrupting fluid communication between the common outlet port 33 and the drain port 32.

8. OPERATION OF THE HYDRAULIC INTENSIFIER

(Figures 5a, 9 and 13)

In general, liquid fuel from the common supply line 16 is admitted by the solenoid valve 30 into the common outlet port 33 during a portion of each engine cycle. It then flows into low pressure chamber 145, as best seen in Figure 9. The filling of low pressure chamber 145 causes the large or low-pressure piston 130 to move downward. This motion in turn forces the rod or high-pressure piston 140 to move downward, and reduce the volume of the compression chamber 150 (Fig. 5a) under the piston 140.

When the voltage pulse 36 ends, and the solenoid valve returns to its closed position as shown in Figure 5a, the operation is as follows. Liquid fuel at the common rail pressure flows from supply line 16 through metering duct 118 and past the check valve 119 into compression chamber 150. This pressure applies a force to the rod or cylinder 140 causing it to move upward. At the same time, the closing of the solenoid valve has opened the passageway between common outlet port 33 and drain port 32, causing the fuel in low pressure chamber 145 to be drained into the fuel return line. Since the pressure in the fuel return line is at a zero or reference level, there is a net pressure differential of 103.4 bars (1500 psi-the common supply pressure) available to drive both of the pistons 130, 140 from their lowermost positions as shown in Figure 9, back to their uppermost positions as shown in Figure 5a.

It will be noted that that the hollow interior of the large piston 130 provides a large internal space which will receive fuel (or lubricating oil if said circuit is used) due to leakage past the large piston 130 and small piston 140. A series of passageways 120 provide communication from this space or chamber through the lower edge of block 110, to annular space 124 of the block 110, and into the fuel drain line. Without this series of passageways, hydraulic locking of the pistons would occur. Check valve 121 shown in Figures 5a and 9 prevents liquid from flowing in the opposite direction and maintains the effectiveness of the intensifier. Thus any accumulation of liquid inside the chamber is prevented through the cooperative action of the drain line 120, check valve 121, and annular space 124.

A further feature of the hydraulic intensifier in accordance with the present invention is the provision of lubricating grooves 128a and 129a. Groove 128a surrounds the large piston 130 while 129a surrounds the small piston 140. Lubricating oil or grease having a high viscosity is admitted into the port 125 as shown in Figure 6 and thence through check valve 127 and ducts 128, 129 to the respective lubricating grooves. The purpose of this arrangement is not merely to provide lubrication for the reciprocating movements of the pistons of the hydraulic intensifier. An additional purpose, perhaps even more important, is to prevent or greatly reduce leakage of the diesel fuel past the lubricating grooves. The prevention or reduction of the fuel leakage is accomplished because the lubricating oil has a much higher viscosity than does the liquid fuel.

## 9. OPERATION OF THE COMPRESSION CHAMBER

(Figures 5a, 7 and 9)

When the high pressure piston 140 is in its most elevated position as shown in Figure 5a, the compression chamber 150 is then full of liquid fuel. As the piston 140 moves upward fuel under pressure flows from the supply line 16 through the entry port 31 and metering duct 118 and past the check valve 119 into the compression chamber. When the high pressure piston starts to move downward, however, the ball valve 119 seats and seals, preventing any flow of the liquid fuel in the reverse direction out the metering duct 118. Thus, a selected or predetermined quantity of fuel at the line pressure (about 103.4 bars) is trapped in the compression chamber 150.

During subsequent operation of the intensifier, the pressure of compression chamber 150 is greatly increased to a pressure equal to the pressure on the large piston times the area ratio of the large and small pistons. The volume of chamber 150 reduces as the pressure increases. As a typical value, the level of pressure of the fuel inside the compression chamber may be increased by a factor of fifteen.

Reference is now made to Figure 13 illustrating the operation of the presently preferred embodiment of the invention. As shown in Figure 13, at zero milliseconds or just before the solenoid 30 opens, the pressure in the compression or high pressure chamber 150 is about 103.4 bars.

Opening of the solenoid valve 30 causes this pressure level to rise rapidly to about 413.6 bars (6,000 psi). The continuing operation of the intensifier, with additional liquid fuel flowing into the low pressure chamber 145, causes the pressure level in the compression chamber to rise to about 1,516.4 bars (22,000 psi). This action takes place over a period of approximately 9 milliseconds. As shown in Figure 13, the T-valve opens when the pressure in the metering chamber reaches about 413.6 bars, and the subsequent transfer of fuel into the accumulator accounts for a reduced rate of pressure increase. The rise and rate of rise of pressure inside the compression chamber are a function of the compressibility of the fuel, and since the compressibility of the fuel is not precisely linear (i.e., a straight line), the pressure increase in the compression chamber is also not linear.

## 10. OPERATION OF THE T-VALVE AND THE NEEDLE VALVE

(Figures 5a, 7 and 9)

The movements of the T-valve and the needle valve are in a definite sequential relationship with each other. The initial position is as shown in Figures 5a and 7, where both valves are closed; that is, the T-valve is in its uppermost position so that its lip 182 is in sealing relationship with the lower face of block 111. At the same time the needle valve member 190 is in its lowermost position so that its valve face 192 is seated upon the valve seat 166, as shown in Figure 8.

The first of the sequential actions to take place is that the hydraulic intensifier causes the pressure of fuel in the compression chamber 150 to rise rapidly as previously mentioned and, as shown by the curve in Figure 13. The T-valve opens when the pressure in compression chamber 150 exceeds the pressure in the accumulator by an amount which is due to both the spring load on the T-valve and the geometry of the sealing lip 182. This is approximately the closing pressure (about 413.6 bars) of the member 190. As previously mentioned, it is here assumed that the fuel system has already been primed, and that the description is of the continuing operation of the system on a steady state basis. The second sequential position of the two valves is that of the T-valve being open, while the needle valve remains closed as shown in Figure 9. As indicated by the arrows in Figure 9, liquid fuel then flows downward around the circumferential edges of the accumulator body or housing.

The next action to take place is the closing of the T-valve, returning both valve members 180 and 190 to their initial positions as shown in Figures 5a, 5b, 7 and 9. This action is caused by the turning off of the solenoid valve 30, with the resultant pressure drop in the lower pressure chamber 145 and in turn in the high pressure chamber 150.

Although the valve positions are the same as previously, the conditions inside the accumulator are now significantly different. That is, the interior reservoir 162 in the accumulator body 160 or housing has been charged with an additional quantity of liquid fuel, raising its internal pressure from about 413.6 bars to about 1,516.4 bars. As a result, differential pressure acting inside the accumulator will cause the needle valve member 190 to be raised off the valve seat 166. Although this action is well known in the prior art, it will be briefly summarized here as well.

The diameter of needle valve 190 beneath the flange 195 is smaller than its diameter above that flange. Internal fluid pressure acting on differential areas as previously described creates a net force upward on the needle valve member. That force must be sufficient to overcome the force of large spring 210. It must, in addition, be sufficient to overcome the force of fluid pressure acting upon the upper end surface 194 of the needle valve member. In this connection, reference is made to the bucking arrows 54 and 55 in Figure 2, which schematically illustrate the pressure changes taking place at the top end of the needle valve member (schematically check valve 60 of Fig. 2). The differential pressure is sufficient to raise the needle valve off its seat, hence upward movement of the needle valve member occurs, and fuel injection commenses through the holes 177 in spray tip 175.

The fuel injection occurs during a time interval of about one to one and a half milliseconds. Internal pressure inside the accumulator quickly falls to the closing pressure for which it was designed, approximately 413.6 bars, depending upon the force of the spring 210 and other design factors. The needle valve member 190 then returns to its closed position. The spherical sealing surface 192 on member 190 re-engages spherical seat 166, the seating stress being minimized by the previously described dimensional relationship between surfaces 192 and 166. Both valve members are again in their initial position as shown in Figures 5a and 7.

More specifically, the opening action of the T-valve is as follows: The pressure in compression chamber 150 is applied to recess 187, i.e., the entire cross-sectional area of the T-valve member 180 less the areas of bore diameter 185 containing the needle valve member 190, and circumferential lip 182. The pressure in the accumulator reaches a larger area, that of the member 180 less bore 185. Hence the pressure in compression chamber 150 is initially applied to a smaller area, and must also overcome the force of spring 200. After the valve opens, only the spring force need be overcome.

The action of the needle valve is self-centering because of its particular construction. That is, the upper end of the needle valve fits loosely in the opening in the spring separator 170. Similarly, the T-valve member 180 also fits loosely inside the spring separator 170. At the same time, the upper end surface 194 of the needle valve is not laterally restricted in any way by the washer 151 above it, or by the lower face of the block 111. Thus, when the needle valve returns to its normal closed position, it centres itself on the valve seat 166 at the lower end of the accumulator, and the upper end portion of the needle valve member positions itself wherever necessary in order to align with the lower end. It is the support means at the upper end of the needle valve which permits it to function in this manner.

An important feature of the needle valve operation is that it is closed only by the force of spring 210. Because the valve face 192 has a slightly smaller radius than valve seat 166, the closing action occurs rapidly and smoothly, with minimal wear on the valve parts.

## 11. OPERATION OF THE UNIT INJECTOR ASSEMBLY

(Figures 2, 12 and 13)

The operation of the unit injector assembly in accordance with the present invention has already been described in general terms in conjunction with the schematic diagram of Figure 2.

Now that the specific mechanisms of the preferred embodiment of the unit injector assembly have been described in conjunction with the detailed drawings thereof, it is appropriate to refer to Figures 12 and 13 which illustrate an example of the actual operation of the device at 5700 rpm.

As shown in Figure 12, the voltage pulse 36 causes the solenoid valve to open, but only after a delay of about 3.0 milliseconds. The common outlet port 33 had previously been bled to zero pressure level through the fluid return or drain port 32. The inward flow of fuel from the inlet 31 causes its pressure to initially rise rather rapidly, but then more slowly since it is necessary to perform work in moving the large piston 130 of the hydraulic intensifier downward. Thus as shown in Figure 12, as the intensifier pistons travel through their range of movement, the pressure in the low pressure chamber 145 rises to the level of the supply pressure (about 103.4 bars). Even before this action is completed, the voltage pulse ends and after a delay of about 2.3 milliseconds the solenoid valve closes.

Closing of the solenoid valve causes the T-valve to close. The pressure in the high pressure chamber 150, which is also the pressure applied to the upper end surface 194 of the needle valve, drops sharply (see Figure 12). The accumulator pressure drops rapidly, but less so. The differential between these two pressures is applied to the needle valve member for driving it upward against the force of big spring 210. Near the upper part of Figure 12 is shown the actual motion or displacement of the needle valve member 190. As shown there, the maximum displacement of the needle is only a little over 0.40 mm (0.016 inch), because that is the spacing between the upper end of the needle valve member and the washer 151 which acts as a bumper to limit needle movement.

A very small displacement of the needle is sufficient to initiate a full flow of the fuel through the orifices. The uppermost curve in Figure 12 illustrates an example of the rate at which fuel is injected into the combustion chamber of an engine cylinder.

## 12. TIMING THE INJECTION

The timing of the fuel injection is established by the end of voltage pulse 36, which causes solenoid 30 to return to its closed position after the aforementioned time delay of about 2.3 milliseconds. The mechanical closing of the solenoid, however, causes the injection of the fuel to occur almost immediately.

The time duration required for the fuel injection to be completed depends upon various design constants of the apparatus. The completion of the injection is determined by the characteristics built into the unit injector assembly, rather than being timed or controlled from some external source.

## 13. ADJUSTING (CONTROLLING)THE FUEL CHARGE

Once the fuel system is primed and the engine is operating at a steady speed and load, the unit injector assembly operates in accordance with the balanced conditions as shown by the curves in Figures 12 and 13. That is, after the injection of each fuel charge, the fuel pressure inside the accumulator returns to the residual pressure level for which the accumulator was designed. Upon the next actuation of the hydraulic intensifier, that pressure level must be equalled and slightly exceeded before the T-valve will open and admit additional fuel from the compression chamber.

During this operating condition, a fuel charge whose quantity is selected in terms of its volume at a specified pressure is transferred from the compression chamber into the accumulator. For example, a typical fuel charge is 30 cubic millimeters at atmospheric pressure. The quantity of this fuel charge will be slightly less than the total amount of fuel that was held in the compression chamber 150 and the metering duct 118b which extends between chamber 150 and check valve 119. When this predetermined fuel charge passes into the accumulator, it may increase the total quantity of fuel contained in the accumulator by approximately five percent. This is made possible by the compressibility of the fuel. For example, the internal capacity of the accumulator may be 700 cubic millimeters (i.e., 700 x .05 = 35 cubic millimeters). Since an operating condition that is in hydraulic balance has been achieved, the quantity of the fuel charge injected from the accumulator into the combustion chamber will be almost precisely the same as the quantity that was transferred from the compression chamber into the accumulator.

It is important to note that with this invention the function of metering the desired mass (as distinguished from volume) of the fuel charge to be injected is accomplished in the accumulator chamber of the injector. Specifically, the mass of each fuel charge injected is metered or determined by the selected fixed volume of the accumulator chamber and by (and a direct function of) the difference between the peak pressure inside the accumulator nozzle and the pressure at which the tip valve closes. Although there is a slight pressure drip between the compression chamber and the accumulator (across the T-valve), the mass of the injected fuel charge is also a direct function of the volume of the accumulator chamber and of the difference between the peak pressure in the compression chamber and the nozzle tip valve closing pressure (fuel injection threshold pressure) of the accumulator. The quantity of fuel transferred into the compression chamber simply replaces the previously injected fuel charge

When it is desired to change the power and/or speed of the engine, positive controls must be exercised. In accordance with the present invention, the preferred method of making such adjustments in the quantity of fuel charge is by adjusting the supply pressure level. This action was discussed previously in connection with the electrical control system 78 and its output line 90 that carries signals to the rail pressure regulator 15.

The quantity of fuel charge may also be adjusted by changing the duration of the time interval through which the hydraulic intensifier operates. That is, the start of the voltage pulse 36 can be advanced or retarded. In general, the voltage pulse commences an appreciable portion of the engine cycle in advance of the time when injection is to occur, and the intensifier builds up pressure in the compression chamber 150 for at least several milliseconds. See Figure 11, wherein a combination of a solid line and a dotted line indicate that the point of commencement of the voltage pulse 36 is subject to adjustment. In that connection it will be noted from the particular example of Figure 12 that a time interval of about 9 milliseconds is required for the intensifier pistons to reach their maximum displacement, and a time interval of about 10 milliseconds is required for the low pressure piston to return to its initial position. Fluid pressure in the low pressure chamber 145 remains at a low pressure until the large piston has returned to its initial upper position; then the pressure in chamber 145 and common output terminal 33 drops to zero. There follows a dead space or unused time interval in the engine cycle, when the capabilities of the unit injector assembly are not being utilized. Increasing or decreasing this unused time interval also involves a concurrent decrease or increase in the period of time that the solenoid valve is open. By making this adjustment to the length of time the solenoid valve remains open, the subsequent length of time that the hydraulic intensifier is able to operate can in turn be increased or decreased, and the quantity of the fuel charge produced by it can be adjusted accordingly.

In addition to adjusting the fuel charge by adjusting the level of the rail pressure, hydraulic control may also be achieved by placing a variable restriction in the fuel return line, and adjusting the magnitude of that restriction. Alternatively, both types of adjustment may be used concurrently.

Furthermore, by means of the microprocessor the adjustment of the duration of the voltage pulse, and the adjustment of the hydraulic pressures supplied to the injector unit assembly, may be used in conjunction with each other, in varying degrees, as desired.

## 14. OPTIMIZING ENGINE PERFORMANCE

An inherent feature of the fuel supply system of the present invention is that the hydraulic power requirement to operate the fuel injectors is relatively constant throughout the entire engine cycle, so that the peak power demand is greatly reduced.

As mentioned previously, when the engine is idling the timing cycle of the electrical control system can be changed so that it coincides with an integral multiple of the normal number of crankshaft revolutions. Thus, a modified operating cycle of the engine can be accomplished to inject a fuel charge only half or one-fourth as often as the basic operating cycle. These cycles are appropriate for light load operation. A fuel charge is injected into each cylinder of the engine only once during an operating cycle.

This mode of operation not only saves fuel, but reduces the amount of exhaust pollutants.

Another feature of the present invention is the utilization of the electrical control system to control the operations of the individual cylinders differently from each other. That is, for example, in the first cylinder of the engine the hydraulic intensifier unit may be turned on for 9 milliseconds, while in the second cylinder the hydraulic intensifier may be turned on for 9½ milliseconds, and in the third cylinder for only 8½ milliseconds. This method of control makes it possible to accomplish in addition to the primary or main adjustment of fuel charge by adjusting the pressure of the common fuel supply, to accomplish a "fine tuning" action. This compensates for any differences between the cylinders in order to give them a balanced operation and improve the overall efficiency and economy of the engine operation.

## 15. CONTROL CHARACTERISTICS

The basic fuel control methods described previously are utilized in performing the engine governing functions. Maximum speed governing, for example, reduces fuel delivery by any of the described methods in response to signals generated by the pulse generator and subsequent operations performed by the electronic control system. In a similar manner the pulse generator in cooperation with the electronic control system may perform a speed control or speed governing function by increasing the fuel delivery to increase engine speed or decrease fuel delivery to decrease engine speed. Thus a selected minimum speed or any speed within the operating range of the engine may be governed.

A sequence of electronic timing signals is generated, and is repeated once each engine cycle. When shifting to the idling mode, the time occupied by the sequence of signals is multiplied by an integral number, but the relative spacing between individual signals is preserved.

## 16. ALTERNATIVE FORMS

Many variations are possible in the details of the mechanisms that are illustrated in Figures 3 through 10, inclusive. Furthermore, in accordance with the present invention a method of controlling engine operation for optimum performance is provided, which may not depend upon the specific type of unit injector assembly that is schematically described in Figure 2.

For example, the pump 12 may be of the variable displacement pressure-compensating type with which pressure regulator 15 would not be required.

It will also be understood that Figures 12 and 13 illustrate the operation of the invention under one particular set of conditions, and that both the operating speed and the design paramameters of the apparatus may be modified with corresponding modification in the operation.

The present invention has been described in considerable detail in order to comply with the patent laws by providing a full public disclosure of at least one of its forms. However, such detailed description is not intended in any way to limit the invention.

## Claims

1. A method for injecting successive, controllably variable charges of a pressurized, compressible fuel into the combustion chamber (80) of an internal combustion engine at selectable times within the engine cycle event using a fuel injection system which includes an injector (70) of the accumulator type wherein a substantially fixed-volume reservoir (70, 162) of the fuel is cyclicly charged through a one-way inlet valve (60) leading from a pressurized supply (16) of the fuel and then discharged through an outlet valve (190) leading into the combustion chamber (80), wherein the opening and closing of both of the valves is controlled by the pressure differential between the reservoir and the supply, and wherein the quantity of the fuel injected in each charge is a function of the volume of the reservoir and the difference in the pressure of the fuel in the reservoir immediately before and after injection, comprising the steps of:

    applying to the inlet valve (60) of the injector (70) a series of fuel supply pressure pulses, each pulse having a controlled pulse width and an amplitude which is modulated between a rail pressure level which is greater than or equal to the fuel pressure desired to be established in the reservoir immediately before discharge in the next succeeding injector cycle, and a vent pressure level which is less, by a fixed amount, than the fuel pressure desired to be left remaining in the reservoir immediately after discharge in the next succeeding injector cycle;

    electronically controlling at least one of the amplitude and pulse width of each fuel supply pressure pulse to establish the pressure of the fuel in the reservoir of the injector immediately before a corresponding injection, and hence, the quantity of fuel injected in each corresponding charge; and

    electronically controlling the phase of each fuel supply pressure pulse relative to the engine cycle event to establish the time within each engine cycle at which each injection commences.

2. The method of Claim 1, wherein the system further includes two sources (16, 20) of the fuel, each pressurized to a respective one of the rail and vent pressure levels, and wherein the injector further includes an electronically-actuated solenoid valve (30) disposed at the inlet of the injector to move between two positions and thereby alternately connect the injector to one or the other of the sources, and wherein the step of applying a series of fuel supply pressure pulses to the inlet valve of the injector further comprises the step of:

    applying an electrical pulse (36) having a controllable pulse width and phase to the solenoid valve to modulate it between its two positions.

3. The method of Claim 2, wherein the electrical pulse applied to the solenoid valve is a square wave pulse.

4. The method of Claims 2 or 3, wherein the step of electronically controlling the pulse width of each fuel supply pressure pulse further comprises the step of:

    controlling the width of the electronic pulse applied to the solenoid valve.

5. The method of any one of Claims 2-4, wherein the step of electronically controlling the phase of each fuel supply pressure pulse further comprises the step of:

    controlling the phase of the electronic pulse applied to the solenoid valve relative to the engine cycle event.

6. The method of any one of Claims 2-5, wherein the rail source and the vent source are each maintained at a selected pressure level, wherein the system further includes an electronically-controlled variable pressure regulator associated with at least one of the rail pressure and vent pressure sources, and wherein the step of electronically controlling the amplitude of each fuel supply pressure pulse further comprises the step of:

    applying an electrical signal to the pressure regulator between injector cycles sufficiently fast to establish a desired pressure level of at least one of the rail source and the vent source before respective ones of them are connected to the injector inlet during the next succeeding injector cycle.

7. The method of any one of Claims 1-6, wherein the quantity of fuel injected in each charge is established by adjusting only one of the rail source pressure level, the vent source pressure level, or the width of the corresponding fuel supply pressure pulse.

8. The method of any one of Claims 1-6, wherein the quantity of fuel injected in each charge is established by adjusting both the pulse width of the corresponding fuel supply pressure pulse and at least one of the rail source pressure level and the vent source pressure level applied to the inlet valve of the injector.

9. The method of any one of Claims 1-8, further comprising the steps of:
sensing one or more of the parameters of engine shaft speed and position, fuel supply pressure, throttle position, coolant temperature and manifold pressure;
processing the sensed parameters in a microprocessor (78) in accordance with a set of engine control instructions contained within the microprocessor and deriving appropriate electrical control signals; and
applying the control signals to the system to control the amplitude, pulse width, and phase of each fuel supply pressure pulse.

10. Apparatus for injecting successive, controllably variable charges of a pressurized, compressible fuel into the combustion chamber (80) of an internal combustion engine at selectable times within the engine cycle event using a fuel injection system which includes an injector (70) of the accumulator type wherein a substantially fixed-volume reservoir (70, 162) of the fuel is cyclicly charged through a one-way inlet valve (60) leading from a pressurized supply (16) of the fuel and then discharged through an outlet valve (190) leading into the combustion chamber, wherein the opening and closing of both of the valves is controlled by the pressure differential between the reservoir and the supply, and wherein the quantity of the fuel injected in each charge is a function of the volume of the reservoir and the difference in the pressure of the fuel in the reservoir immediately before and after injection, comprising:
means (16, 30, 50) for applying a series of fuel supply pressure pulses to the inlet of the injector, each pulse having a controlled pulse width and an amplitude which is modulated between a rail pressure level greater than or equal to the fuel pressure desired to be established in the reservoir immediately before discharge in the next succeeding injector cycle, and a vent pressure level which is less, by a fixed amount, than the fuel pressure desired to be left remaining in the reservoir immediately after discharge in the next succeeding injector cycle;
means (78, 90, 91) for electronically controlling at least one of the amplitude and pulse width of each fuel supply pressure pulse to establish the pressure of the fuel in the reservoir immediately before each corresponding injection, and hence, the quantity of fuel injected in each corresponding charge; and
means (86, 78) for electronically controlling the phase of each fuel supply pressure pulse relative to the engine cycle event to establish the time within each engine cycle at which each injection commences.

11. The apparatus of claim 10, wherein the means for applying a series of fuel supply pressure pulses to the inlet of the injector further comprises:
two sources (16, 20) of the fuel, each pressurized to a respective one of the rail and vent pressure levels;
an electronically-actuated solenoid valve (30) disposed at the inlet of the injector to move between two positions and thereby alternately connect the inlet of the injector to one or the other of the sources; and
means (91, 37) for applying an electrical pulse having a controllable pulse width and phase to the solenoid valve to modulate the valve between the two positions.

12. The apparatus of Claim 11, wherein the rail source and the vent source are each maintained at a constant pressure level, and wherein the means for electronically controlling the amplitude of each fuel supply pressure pulse further comprises:
an electronically-controlled variable pressure regulator (15) associated with at least one of the rail source and the vent source; and
means (90) for applying an electrical signal to the pressure regulator between injector cycles sufficiently fast to establish a desired pressure level of at least one of the rail source and the vent source before respective ones of them are connected to the injector inlet during the next succeeding injector cycle.

13. The apparatus of Claims 11 or 12, wherein the solenoid valve further comprises:
a two-way, two-position, normally-open, ball-poppet-type of valve.

14. The apparatus of Claims 11 or 12, wherein the solenoid valve further comprises:
a three-way, two-position, sleeve-type of valve.

15. The apparatus of either of Claims 11 or 12, wherein the solenoid valve further comprises:
a three-way, two-position ball-poppet type of valve (30).

16. The apparatus of Claims 13 or 15, wherein the solenoid valve further comprises:
a plunger (34a) having a first ball (31a) at one end which is in communication with the rail pressure source (31), an extension (34b), and a second ball (32a) at the other end of the extension which is in communication with vent pressure source (32), each of the balls being captured for reciprocating movement to accomplish a valving action, and the inlet valve of the injector being located intermediate the two balls and communicating with both of them.

17. The apparatus of any one of Claims 10-16, further comprising:
means for sensing one or more of the parameters of engine shaft speed and position (86), fuel supply pressure (83), throttle position (84), coolant temperature (82) and manifold pressure (81);
a microprocessor (78) for processing the sensed parameters in accordance with a set of instructions contained within the microprocessor and generating electrical control signals responsive thereto;
means (90, 91) for applying the control signals to the system to control the amplitude, pulse width, and phase of each fuel supply pressure pulse.

18. The apparatus Claim 17, wherein the control response time of the system is less than or equal to the time for one engine cycle.

## Patentansprüche

1. Verfahren zum Einspritzen aufeinanderfolgender, steuerbar veränderlicher Ladungen eines unter Druck stehenden, komprimierbaren Kraftstoffes in die Brennkammer (80) einer Brennkraftmaschine zu wählbaren Zeiten innerhalb des Motortaktes unter Verwendung eines Kraftstoffeinspritzsystems, welches eine akkumulatorartige Einspritzdüse (70) aufweist, dadurch gekennzeichnet, daß ein Kraftstoffbehälter (70, 162) mit im wesentlichen festem Volumen zyklisch gefüllt wird über ein Einwegeinlaßventil (60), das von einer mit Druck beaufschlagten Kraftstoffversorgung (16) kommt, und dann durch ein in die Brennkammer (80) führendes Auslaßventil (190) entleert wird, daß das Öffnen und Schließen der beiden Ventile durch den Druckunterschied zwischen dem Behälter und der Kraftstoffversorgung gesteuert wird, und daß die bei jeder Füllung eingespritzte Kraftstoffmenge abhängig ist von dem Volumen des Behälters und dem Druckunterschied des Kraftstoffs in dem Behälter unmittelbar vor und nach dem Einspritzvorgang, umfassend die folgenden Schritte:
an das Einlaßventil (60) der Einspritzdüse (70) wird eine Reihe von Förderdruckimpulsen angelegt, wobei jeder Impuls eine gesteuerte Impulsbreite besitzt und eine Amplitude, die moduliert wird zwischen einem Einlaßdruckpegel, der größer oder gleich ist wie der Kraftstoffdruck, der in dem nächstfolgenden Einspritzzyklus unmittelbar vor der Entleerung in dem Behälter erzeugt werden soll, und einem Auslaßdruckpegel, der um einen festen Betrag geringer ist als der Kraftstoffdruck, der in dem nächstfolgenden Einspritzzyklus unmittelbar nach der Entleerung in dem Behälter noch herrschen soll;
von jedem Förderdruckimpuls wird mindestens entweder die Amplitude oder die Impulsbreite elektronisch gesteuert, um den Druck des Kraftstoffes in dem Behälter der Einspritzdüse unmittelbar vor einem entsprechenden Einspritzvorgang zu bestimmen, und damit die Menge des bei jeder entsprechenden Füllung eingespritzten Kraftstoffes; und
die Phase jedes Förderdruckimpulses wird in bezug auf den Motortakt elektronisch gesteuert, um den Zeitpunkt innerhalb jedes Motortaktes zu bestimmen, an dem jeder Einspritzvorgang beginnt.

2. Verfahren nach Anspruch 1, dadurch gekennzeichnet, daß das System ferner zwei Kraftstoffquellen (16, 20) umfaßt, die jeweils auf den Einlaßdruckpegel bzw. auf den Auslaßdruckpegel mit Druck beaufschlagt sind, und daß die Einspritzdüse ferner ein elektronisch betätigtes Magnetventil (30) umfaßt, das am Einlaß der Einspritzdüse angeordnet ist und sich zwischen zwei Stellungen bewegt und dadurch abwechselnd die Einspritzdüse mit der einen oder mit der anderen Kraftstoffquelle verbindet, und daß der Schritt des Anlegens einer Reihe von Förderdruckimpulsen an das Einlaßventil der Einspritzdüse ferner den folgenden Schritt umfaßt:

Anlegen eines elektrischen Impulses (36) mit einer steuerbaren Impulsbreite und Phase an das Magnetventil, um dieses zwischen seinen zwei Stellungen zu modulieren.

3. Verfahren nach Anspruch 2, dadurch gekennzeichnet, daß der an das Magnetventil angelegte elektrische Impuls ein Rechteckimpuls ist.

4. Verfahren nach Anspruch 2 oder 3, dadurch gekennzeichnet, daß der Schritt des elektronischen Steuerns der Impulsbreite von jedem Förderdruckimpuls ferner folgenden Schritt umfaßt:

Steuern der Breite des an das Magnetventil angelegten elektronischen Impulses.

5. Verfahren nach einem der Ansprüche 2-4, dadurch gekennzeichnet, daß der Schritt des elektronischen Steuerns der Phase jedes Förderdruckimpulses ferner folgenden Schritt umfaßt:

Steuern der Phase des an das Magnetventil angelegten elektronischen Impulses in bezug auf den Motortakt.

6. Verfahren nach einem der Ansprüche 2-5, dadurch gekennzeichnet, daß die Einlaßdruckquelle und die Auslaßdruckquelle jeweils auf einem ausgewählten Druckpegel gehalten werden, dadurch gekennzeichnet, daß das System ferner einen elektronisch gesteuerten Druckregler aufweist, der mit mindestens einer von der Einlaßdruckquelle und der Auslaßdruckquelle verbunden ist, und daß der Schritt des elektronischen Steuerns der Amplitude von jedem Förderdruckimpuls ferner den folgenden Schritt umfaßt:

Anlegen eines elektrischen Signals an den Druckregler zwischen Einspritzzyklen, und zwar so schnell, daß ein gewünschter Druckpegel von mindestens einer von der Einlaßdruckquelle und der Auslaßdruckquelle erzeugt wird, bevor diese während des nächstfolgenden Einspritzzyklus jeweils mit dem Einspritzdüseneinlaß verbunden werden.

7. Verfahren nach einem der Ansprüche 1-6, dadurch gekennzeichnet, daß die bei jeder Füllung eingespritzte Kraftstoffmenge dadurch bestimmt wird, daß man jeweils nur entweder den Einlaßdruckpegel, den Auslaßdruckpegel oder die Breite des entsprechenden Förderdruckimpulses einstellt.

8. Verfahren nach einem der Ansprüche 1-6, dadurch gekennzeichnet, daß die bei jeder Füllung eingespritzte Kraftstoffmenge dadurch bestimmt wird, daß man sowohl die Impulsbreite des entsprechenden Förderdruckimpulses als auch wenigstens einen von dem an das Einlaßventil der Einspritzdüse angelegten Einlaßdruckpegel und dem Auslaßdruckpegel einstellt.

9. Verfahren nach einem der Ansprüche 1-8, ferner umfassend die folgenden Schritte:

Erfassen von einem oder mehr der Parameter Motorwellendrehzahl und -stellung, Förderdruck, Drosselstellung, Kühlmitteltemperatur und Ladedruck;

Verarbeiten der erfaßten Parameter in einem Mikroprozessor (78) gemäß einem Satz von Motorsteuerbefehlen, die in dem Mikroprozessor enthalten sind, und Herleiten entsprechender elektrischer Steuersignale; und

Anlegen der Steuersignale an das System zur Steuerung der Amplitude, der Impulsbreite und der Phase von jedem Förderdruckimpuls.

10. Vorrichtung zum Einspritzen aufeinanderfolgender, steuerbar veränderlicher Ladungen eines unter Druck stehenden, komprimierbaren Kraftstoffes in die Brennkammer (80) einer Brennkraftmaschine zu wählbaren Zeiten innerhalb des Motortaktes unter Verwendung eines Kraftstoffeinspritzsystems, welches eine akkumulatorartige Einspritzdüse (70) aufweist, dadurch gekennzeichnet, daß ein Kraftstoffbehälter (70, 162) mit im wesentlichen festem Volumen zyklisch gefüllt wird über ein Einwegeinlaßventil (60), das von einer mit Druck beaufschlagten Kraftstoffversorgung (16) kommt, und dann durch ein in die Brennkammer führendes Auslaßventil (190) entleert wird, daß das Öffnen und Schließen der beiden Ventile durch den Druckunterschied zwischen dem Behälter und der Kraftstoffversorgung gesteuert wird, und daß die bei jeder Füllung eingespritzte Kraftstoffmenge abhängig ist von dem Volumen des Behälters und dem Druckunterschied des Kraftstoffes in dem Behälter unmittelbar vor und nach dem Einspritzvorgang, umfassend:

eine Einrichtung (16, 30, 50), die eine Reihe von Förderdruckimpulsen an den Einlaß der Einspritzdüse anlegt, wobei jeder Impuls eine gesteuerte Impulsbreite und eine Amplitude besitzt, die moduliert ist zwischen einem Einlaßdruckpegel, der größer oder gleich ist wie der Kraftstoffdruck, der in dem nächstfolgenden Einspritzzyklus unmittelbar vor der Entleerung in dem Behälter erzeugt werden soll, und einem Auslaßdruckpegel, der um einen festen Betrag geringer ist als der Kraftstoffdruck, der in dem nächstfolgenden Einspritzzyklus unmittelbar nach der Entleerung in dem Behälter noch herrschen soll;

eine Einrichtung (78, 90, 91), die mindestens die Amplitude oder die Impulsbreite von jedem Förderdruckimpuls elektronisch steuert, um den Kraftstoffdruck in dem Behälter unmittelbar vor dem jeweiligen Einspritzvorgang zu bestimmen, und damit die Menge des bei der jeweiligen Füllung eingespritzten Kraftstoffes; und

eine Einrichtung (86, 78), die die Phase von jedem Förderdruckimpuls in bezug auf den Motortakt elektronisch steuert, um den Zeitpunkt innerhalb von jedem Motortakt zu bestimmen, an dem jeder Einspritzvorgang beginnt.

**11.** Vorrichtung nach Anspruch 10, dadurch gekennzeichnet, daß die Einrichtung zum Anlegen einer Reihe von Förderdruckimpulsen an den Einlaß der Einspritzdüse ferner umfaßt:

zwei Kraftstoffquellen (16, 20), die jeweils entweder auf den Einlaßdruckpegel oder auf den Auslaßdruckpegel mit Druck beaufschlagt sind;

ein elektronisch betätigtes Magnetventil (30), das am Einlaß der Einspritzdüse angeordnet ist und sich zwischen zwei Stellungen bewegt und dadurch abwechselnd den Einlaß der Einspritzdüse mit der einen oder mit der anderen der Kraftstoffquellen verbindet; und

eine Einrichtung (91, 37), die einen elektrischen Impuls mit einer steuerbaren Impulsbreite und Phase an das Magnetventil anlegt, um das Ventil zwischen den zwei Stellungen zu modulieren.

**12.** Vorrichtung nach Anspruch 11, dadurch gekennzeichnet, daß die Einlaßdruckquelle und die Auslaßdruckquelle jeweils auf einen konstanten Druckpegel gehalten werden, und daß die Einrichtung zum elektronischen Steuern der Amplitude von jedem Förderdruckimpuls ferner umfaßt:

einen elektronisch gesteuerten Druckregler (15), der wenigstens mit einer von der Einlaßdruckquelle und der Auslaßdruckquelle verbunden ist; und

eine Einrichtung (90), die zwischen Einspritzzyklen ein elektrisches Signal an den Druckregler anlegt, und zwar so schnell, daß ein gewünschter Druckpegel von wenigstens einer von der Einlaßdruckquelle und der Auslaßdruckquelle hergestellt wird, bevor diese jeweils während des nächstfolgenden Einspritzzyklus mit dem Einspritzdüseneinlaß verbunden werden.

**13.** Vorrichtung nach Anspruch 11 oder 12, dadurch gekennzeichnet, daß das Magnetventil ferner umfaßt: ein Zweiwege-, Zweistellungs-, normalerweise offenes, Kugel-Teller-Ventil.

**14.** Vorrichtung nach Anspruch 11 oder 12, dadurch gekennzeichnet, daß das Magnetventil ferner umfaßt: ein Dreiwege-, Zweistellungs-Schiebeventil.

**15.** Vorrichtung nach Anspruch 13 oder 15, dadurch gekennzeichnet, daß das Magnetventil ferner umfaßt: ein Dreiwege-, Zweistellungs-, Kugel-Teller-Ventil (30).

**16.** Vorrichtung nach Anspruch 13 oder 15, dadurch gekennzeichnet, daß das Magnetventil ferner umfaßt:

einen Stößel (34a) mit einer ersten Kugel (31a) an einem Ende, der mit der Einlaßdruckquelle (31) verbunden ist, eine Verlängerung (34b), und eine zweite Kugel (32a) am anderen Ende der Verlängerung, die mit der Auslaßdruckquelle (32) verbunden ist, wobei jede der Kugeln so gehalten ist, daß sie eine Hin- und Herbewegung ausführt, um eine Ventilwirkung zu erreichen, und das Einlaßventil der Einspritzdüse liegt zwischen den zwei Kugeln und ist mit beiden von ihnen verbunden.

**17.** Vorrichtung nach einem der Ansprüche 10 bis 16, ferner umfassend:

eine Einrichtung zum Erfassen von einem oder mehr der Parameter Motorwellendrehzahl und -stellung (86), Förderdruck (83), Drosselstellung (84), Kühlmitteltemperatur (82) und Ladedruck (81);

einen Mikroprozessor (78), der die erfaßten Parameter gemäß einem Satz von Befehlen verarbeitet, die in dem Mikroprozessor enthalten sind, und der in Abhängigkeit davon elektrische Steuersignale erzeugt;

eine Einrichtung (90, 91) die die Steuersignale an das System anlegt, um die Amplitude, die Impulsbreite und die Phase von jedem Förderdruckimpuls zu steuern.

**18.** Vorrichtung nach Anspruch 17, dadurch gekennzeichnet, daß die Ansprechzeit des Systems kleiner oder gleich ist wie die Zeit für einen Motortakt.

## Revendications

1.- Procédé pour injecter des charges successives, modifiables de façon contrôlée, d'un carburant compressible sous pression dans la chambre de combustion (80) d'un moteur à combustion interne à des moments pouvant être sélectionnés dans le déroulement du cycle du moteur en utilisant un système d'injection de carburant qui comprend un injecteur (70) du type accumulateur où un réservoir de carburant (70,162) d'un volume sensiblement fixe est chargé cycliquement par l'intermédiaire d'une soupape d'admission unidirectionnelle (60) à partir d'une source pressurisée (16) du carburant et est ensuite déchargé par l'intermédiaire d'une soupape de sortie (190) débouchant dans la chambre de combustion (80), procédé dans lequel l'ouverture et la fermeture des deux soupapes sont commandées par la différence de pression entre le réservoir et la source de carburant et dans lequel la quantité de carburant injectée dans chaque charge est une fonction du volume du réservoir et de la différence entre les pressions du carburant dans le réservoir immédiatement avant et après injection, procédé comprenant les étapes consistant à :

- appliquer à la soupape d'entrée (60) de l'injecteur (70) une série d'impulsions de pression d'alimentation en carburant, chaque impulsion ayant une durée contrôlée et une amplitude qui est modulée entre un niveau de pression de fermeture qui est supérieur ou égal à la pression de carburant devant être établie dans le réservoir immédiatement avant une décharge dans le cycle d'injecteur suivant, et un niveau de pression d'ouverture qui est inférieur, d'une valeur fixée, à la pression de carburant devant subsister dans le réservoir immédiatement après la décharge dans le cycle d'injecteur suivant ;
- commander électroniquement au moins un des paramètres constitués par l'amplitude et la durée d'impulsion de chaque impulsion de pression d'alimentation en carburant pour établir la pression du carburant dans le réservoir de l'injecteur immédiatement avant une injection correspondante, et par conséquent la quantité de carburant injectée dans chaque charge correspondante ; et
- commander électroniquement la phase de chaque impulsion de pression d'alimentation en carburant par rapport au début du cycle du moteur afin de définir l'instant, pendant chaque cycle de moteur, où chaque injection commence.

2.- Le procédé selon la revendication 1, dans lequel le système comprend en outre deux sources (16,20) de carburant, chacune étant pressurisée respectivement à un des niveaux de pression de fermeture et d'ouverture, et dans lequel l'injecteur comporte en outre une électrovalve (30) actionnée électroniquement et disposée à l'entrée de l'injecteur pour se déplacer entre deux positions et reliée ainsi alternativement l'injecteur à l'une ou l'autre des sources, et dans lequel l'étape d'application d'une série d'impulsions de pression d'alimentation en carburant à la soupape de l'injecteur comprend en outre l'étape consistant à :

appliquer une impulsion électrique (36) ayant une durée et une phase contrôlables à l'électrovalve pour assurer sa modulation entre ses deux positions.

3.- Le procédé selon la revendication 2, dans lequel l'impulsion électrique appliquée à l'électrovalve est Une impulsion de forme d'onde carrée.

4.- Le procédé selon les revendications 2 ou 3, dans lequel l'étape de commande électronique de la durée d'impulsion de chaque impulsion de pression d'alimentation en carburant comprend en outre l'étape consistant à :

commander la durée de l'impulsion électronique appliquée à l'électrovalve.

5.- Le procédé selon l'une quelconque des revendications 2 à 4, dans lequel l'étape de commande électronique de la phase de chaque impulsion de pression d'alimentation en carburant comprend en outre l'étape consistant à :

commander la phase de l'impulsion électronique appliquée à l'électrovalve par rapport au début du cycle du moteur.

6.- Le procédé selon l'une quelconque des revendications 2 à 5, dans lequel la source de pression de fermeture et la source de pression d'ouverture sont chacune maintenues à un niveau de pression sélectionné, le système comportant en outre un régulateur de presison variable commandé électroniquement et associé à au moins une des sources de pression de fermeture et de pression d'ouverture, tandis que l'étape de commande électronique de l'amplitude de chaque impulsion de pression d'alimentation en carburant comprend en outre l'étape consistant à :

appliquer un signal électrique au régulateur de pression entre des cycles d'injecteur suffisamment rapidement pour établir un niveau désiré de pression pour au moins une des sources de pression de fermeture et de pression d'ouverture avant que respectivement une desdites sources soit reliée à l'entrée de l'injecteur pendant le cycle d'injecteur immédiatement suivant.

7.- Le procédé selon l'une quelconque des revendications 1 à 6, dans lequel la quantité de carburant injectée dans chaque charge est établie par réglage de seulement un des paramètres constitué par le niveau de pression de la source de pression de fermeture, le niveau de pression de la source de pression d'ouverture ou bien la durée de l'impulsion de pression d'alimentation en carburant correspondante.

8.- Le procédé selon l'une quelconque des revendications 1 à 6, dans lequel la quantité de carburant injectée dans chaque charge est établie par réglage à la fois de la durée de l'impulsion de pression d'alimentation en carburant correspondante et d'au moins un des niveaux de pression de la source de pression de fermeture et de la source de pression d'ouverture qui est appliqué à la soupape d'entrée de l'injecteur.

9.- Le procédé selon l'une quelconque des revendications 1 à 8, comprenant en outre les étapes consistant à :

- capter un ou plusieurs des paramètres constitués par la vitesse et la position d'arbre de moteur, la pression d'alimentation en carburant, la position de papillon, la température de réfrigérant et la pression de collecteur ;
- prêter les paramètres captés dans un microprocesseur (78) en concordance avec une série d'instructions de commande de moteur contenues dans le microprocesseur et en dériver des signaux électriques de commande appropriés ; et
- appliquer les signaux de commande aux systèmes pour commander l'amplitude, la durée d'impulsion et la phase de chaque impulsion de pression d'alimentation en carburant.

10.- Dispositif pour injecter des charges successives, modifiables de façon contrôlée, d'un carburant compressible et pressurisé dans la chambre de combustion (80) d'un moteur à combustion interne à des moments pouvant être sélectionnés pendant le déroulement du cycle du moteur en utilisant un système d'injection de carburant qui comprend un injecteur (70) du type accumulateur où un réservoir de carburant (70,162) de volume sensiblement fixe est chargé cycliquement par l'intermédiaire d'une soupape d'entrée unidirectionnelle (60) à partir d'une source pressurisée (16) du carburant et est ensuite déchargé par l'intermédiaire d'une soupape de sortie (190) débouchant dans la chambre de combustion, l'ouverture et la fermeture des deux soupapes étant commandées par la différence de pression entre le réservoir et la source d'alimentation tandis que la quantité de carburant injectée dans chaque charge est une fonction du volume du réservoir et de la différence entre les pressions du carburant dans le réservoir immédiatement avant et après injection, comprenant :

- des moyens (16,30,50) pour appliquer une série d'impulsions de pression d'alimentation en carburant à l'entrée de l'injecteur, chaque impulsion ayant une durée contrôlée et une amplitude qui est modulée entre un niveau de pression de fermeture supérieur ou égal à la pression de carburant devant être établie dans le réservoir immédiatement avant décharge dans le cycle d'injecteur immédiatement suivant, et un niveau de pression d'ouverture qui est inférieur, d'une valeur fixée, à la pression de carburant devant subsister dans le réservoir immédiatement après décharge dans le cycle d'injecteur immédiatement suivant ;
- des moyens (78,90,91) pour commander électroniquement au moins un des paramètres constitué par l'amplitude et la durée de chaque impulsion de pression d'alimentation en carburant pour établir la pression du carburant dans le réservoir immédiatement avant chaque injection correspondante, et par conséquent la quantité de carburant injectée dans chaque charge correspondante ; et
- des moyens (86,78) pour commander électroniquement la phase de chaque impulsion de pression d'alimentation en carburant par rapport au début du cycle de moteur de façon à établir l'instant, pendant chaque cycle de moteur, où chaque injection commence.

11.- Dispositif selon la revendication 10, dans lequel les moyens pour appliquer une série d'impulsions de pression d'alimentation en carburant à l'entrée de l'injecteur comprennent en outre :

- deux sources (16,20) de carburant, chacune pressurisée respectivement à un des niveaux de pression de fermeture et d'ouverture ;
- une électrovalve (30) actionnée électroniquement, disposée a l'entrée de l'injecteur pour se déplacer entre deux positions et pour relier ainsi alternativement l'entrée de l'injecteur à l'une ou l'autre des sources ; et
- des moyens (91,37) pour appliquer une impulsion électrique ayant une durée et une phase pouvant être commandées à l'électrovalve afin de moduler la valve entre les deux positions.

12.- Dispositif selon la revendication 11, dans lequel la source de pression de fermeture et la source de pression d'ouverture sont chacune maintenues à un niveau de pression constant et dans lequel les moyens de commande électronique de l'amplitude de chaque impulsion de pression d'alimentation en carburant comprennent en outre :

- un régulateur (15) de pression variable commandé électroniquement et associé à au moins une des sources constituées par la source de pression de fermeture et la source de pression d'ouverture ; et
- des moyens (30) pour appliquer un signal électrique au régulateur de pression entre des cycles d'injecteur suffisamment rapidement pour établir un niveau désiré de pression pour au moins une des sources de pression de fermeture et de pression d'ouverture avant que les sources respectives soient reliées à l'entrée de l'injecteur pendant le cycle d'injecteur immédiatement suivant.

13.- Dispositif selon l'une des revendications 11 ou 12, dans lequel l'électrovalve comprend en outre :

une valve du type à champignon-bille normalement ouverte à deux positions et deux voies.

14.- Dispositif selon les revendications 11 ou 12, dans lequel l'électrovalve comprend en outre :

une valve du type à manchon, deux positions et trois voies.

15.- Dispositif selon l'une des revendications 11 ou 12, dans lequel l'électrovalve comprend en outre :

une valve (30) du type à bille-champignon, deux positions, trois voies.

16.- Dispositif selon les revendications 13 ou 15, dans lequel l'électrovalve comprend en outre :

un plongeur (34a) comportant une première bille (31a) à une extrémité qui est en communication avec la source de pression de fermeture (31), un prolongement (34b), et une seconde bille (32a) à l'autre extrémité du prolongement qui est en communication avec la source de pression d'ouverture (32), chacune des billes étant maintenue pour un mouvement alternatif en vue d'exercer une action de soupape, et la soupape d'entrée de l'injecteur étant située entre les deux billes et communiquant avec les deux.

17.- Dispositif selon l'une quelconque des revendications 10 à 14, comprenant en outre :

- des moyens pour capter un ou plusieurs des paramètres constitués par la vitesse et la position d'arbre de moteur (86), la pression d'alimentation en carburant (83), la position de papillon (84), la température de réfrigérant (82) et la pression de collecteur (81) ;
- un microprocesseur (78) pour traiter les paramètres captés en concordance avec une série d'instructions contenues dans le microprocesseur et pour produire des signaux électriques de commande en réponse à celles-ci ; et
- des moyens (90,91) pour appliquer les signaux de commande au système afin de commander l'amplitude, la durée d'impulsion et la phase de chaque impulsion de pression d'alimentation en carburant.

18.- Dispositif selon la revendication 17, dans lequel le temps de réponse du système à la commande est inférieur ou égal à la durée d'un cycle de moteur.

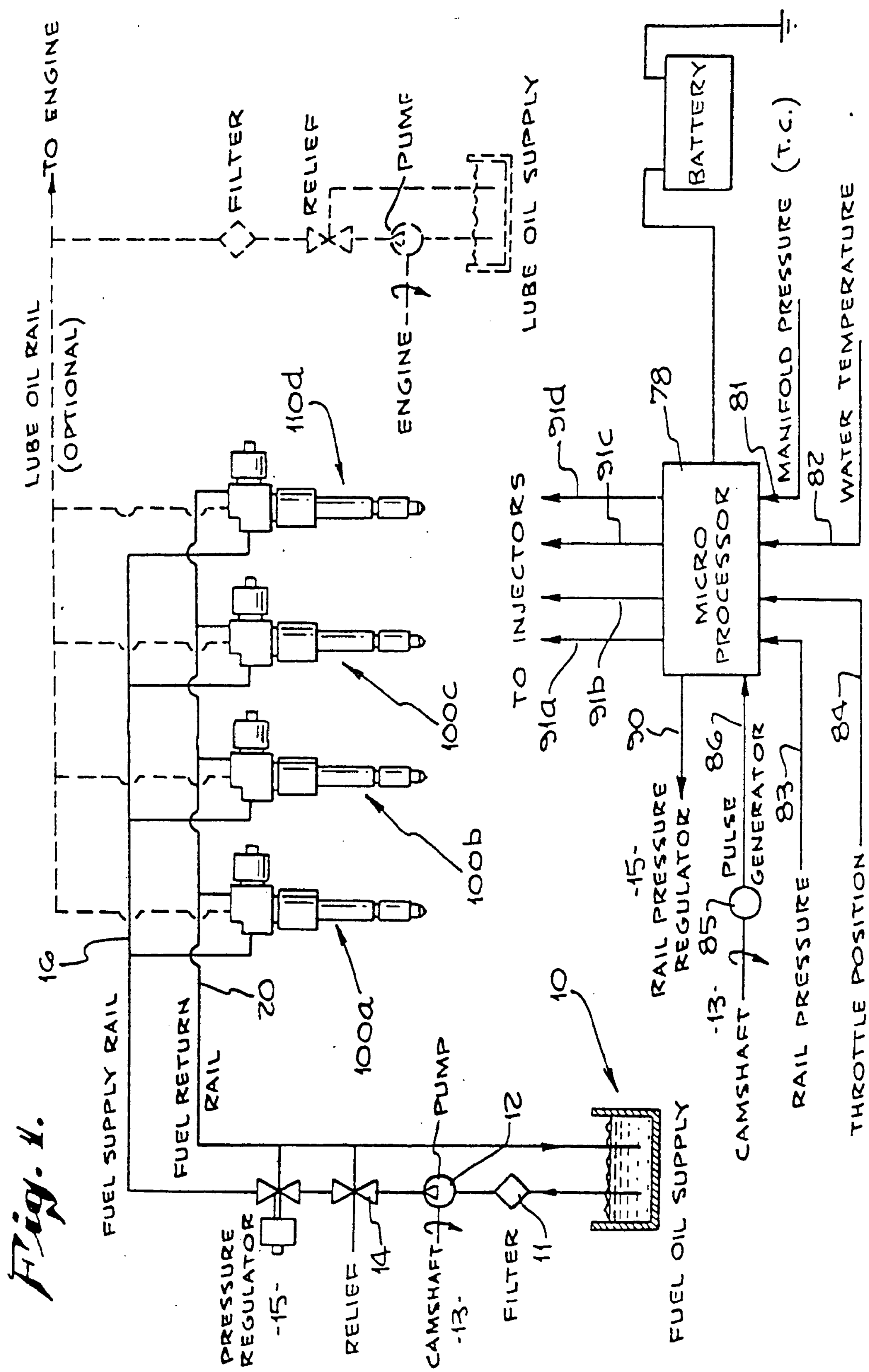
Fig. 1.
FUEL SUPPLY RAIL
16
FUEL RETURN RAIL
20
100a
100b
100c
110d
LUBE OIL RAIL (OPTIONAL)
TO ENGINE
FILTER
RELIEF
PUMP
ENGINE
LUBE OIL SUPPLY
BATTERY
TO INJECTORS
91a
91b
91c
91d
78
MICRO PROCESSOR
81
MANIFOLD PRESSURE (T.C.)
82
WATER TEMPERATURE
90
RAIL PRESSURE REGULATOR
-15-
86
PULSE GENERATOR
85
-13-
CAMSHAFT
83
RAIL PRESSURE
84
THROTTLE POSITION
10
PUMP
12
PRESSURE REGULATOR
-15-
RELIEF
14
CAMSHAFT
-13-
FILTER
11
FUEL OIL SUPPLY

FIG. 2

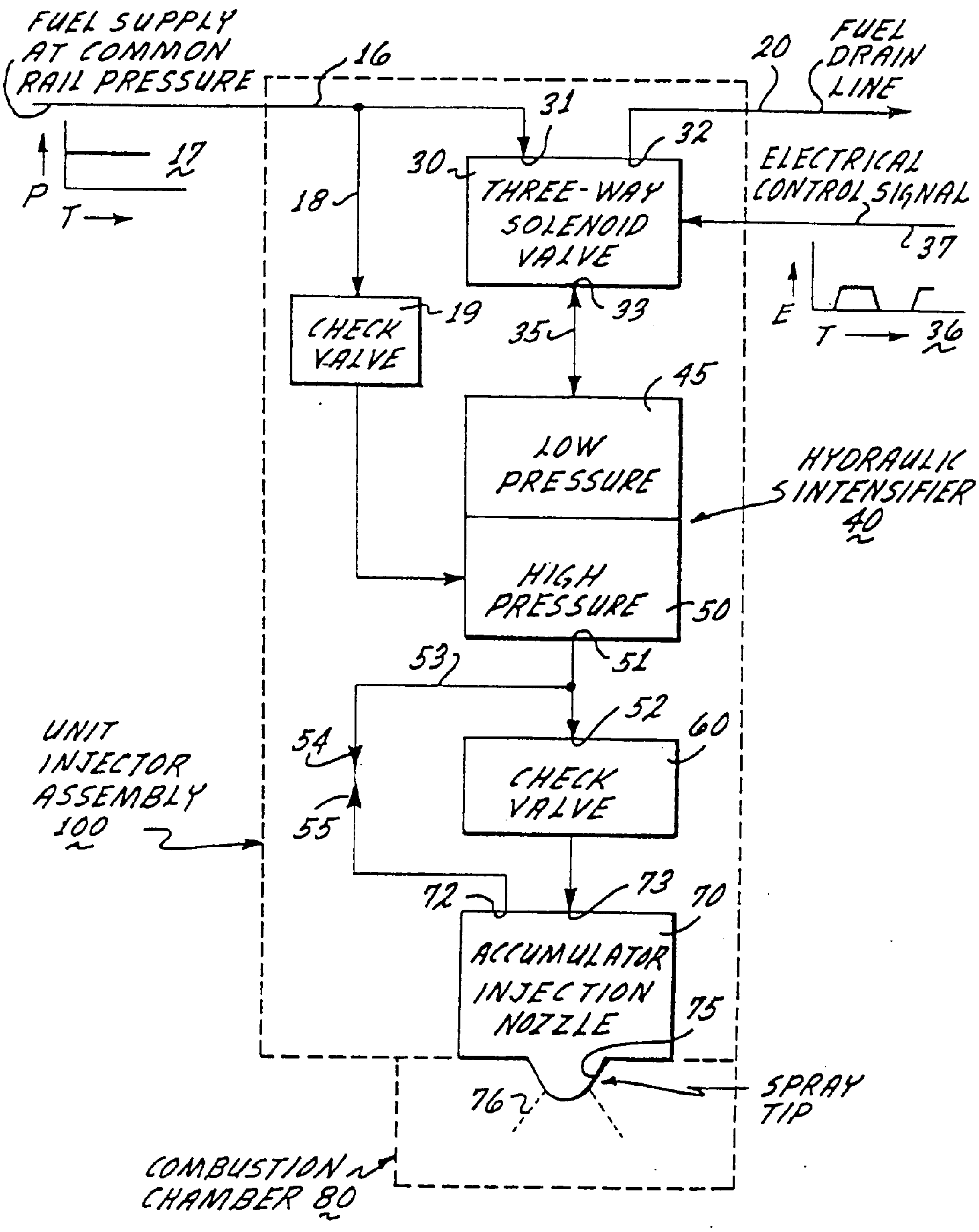
FUEL SUPPLY AT COMMON RAIL PRESSURE
16
P
T
17
18
19
CHECK VALVE
30
31
32
THREE-WAY SOLENOID VALVE
33
35
20
FUEL DRAIN LINE
ELECTRICAL CONTROL SIGNAL
37
E
T
36
45
LOW PRESSURE
HIGH PRESSURE
50
HYDRAULIC INTENSIFIER 40
51
53
52
60
CHECK VALVE
54
55
UNIT INJECTOR ASSEMBLY 100
72
73
70
ACCUMULATOR INJECTION NOZZLE
75
76
SPRAY TIP
COMBUSTION CHAMBER 80

Fig. 3

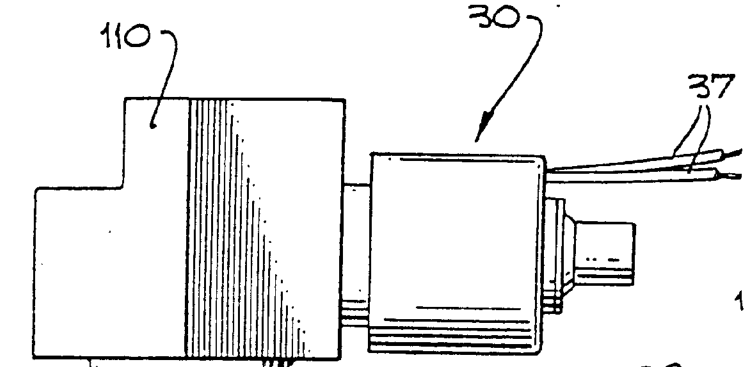


Fig. 10.

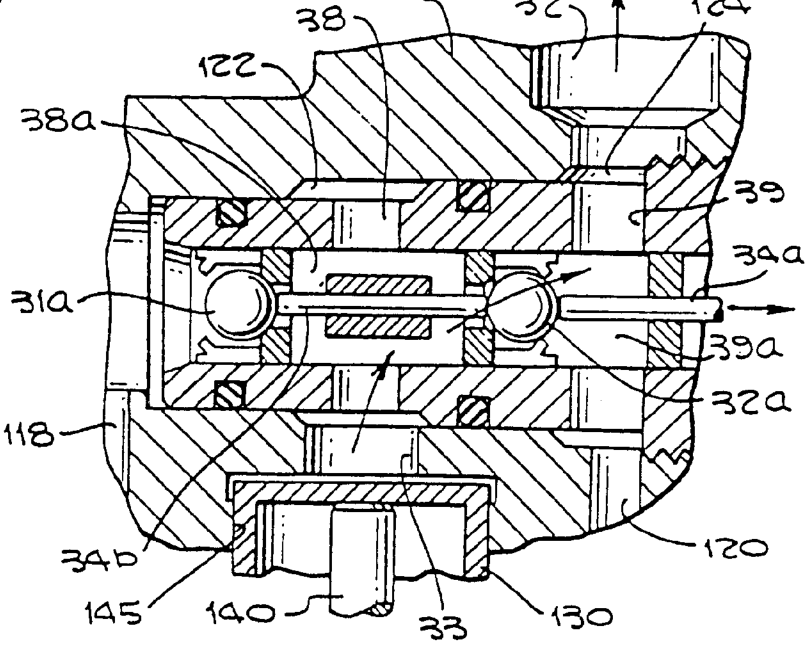


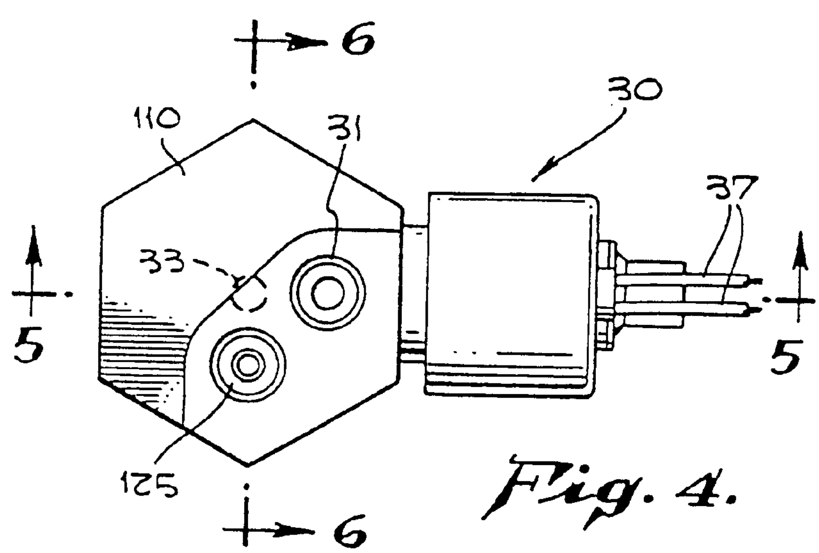


Fig. 4.

*Fig. 5.a*

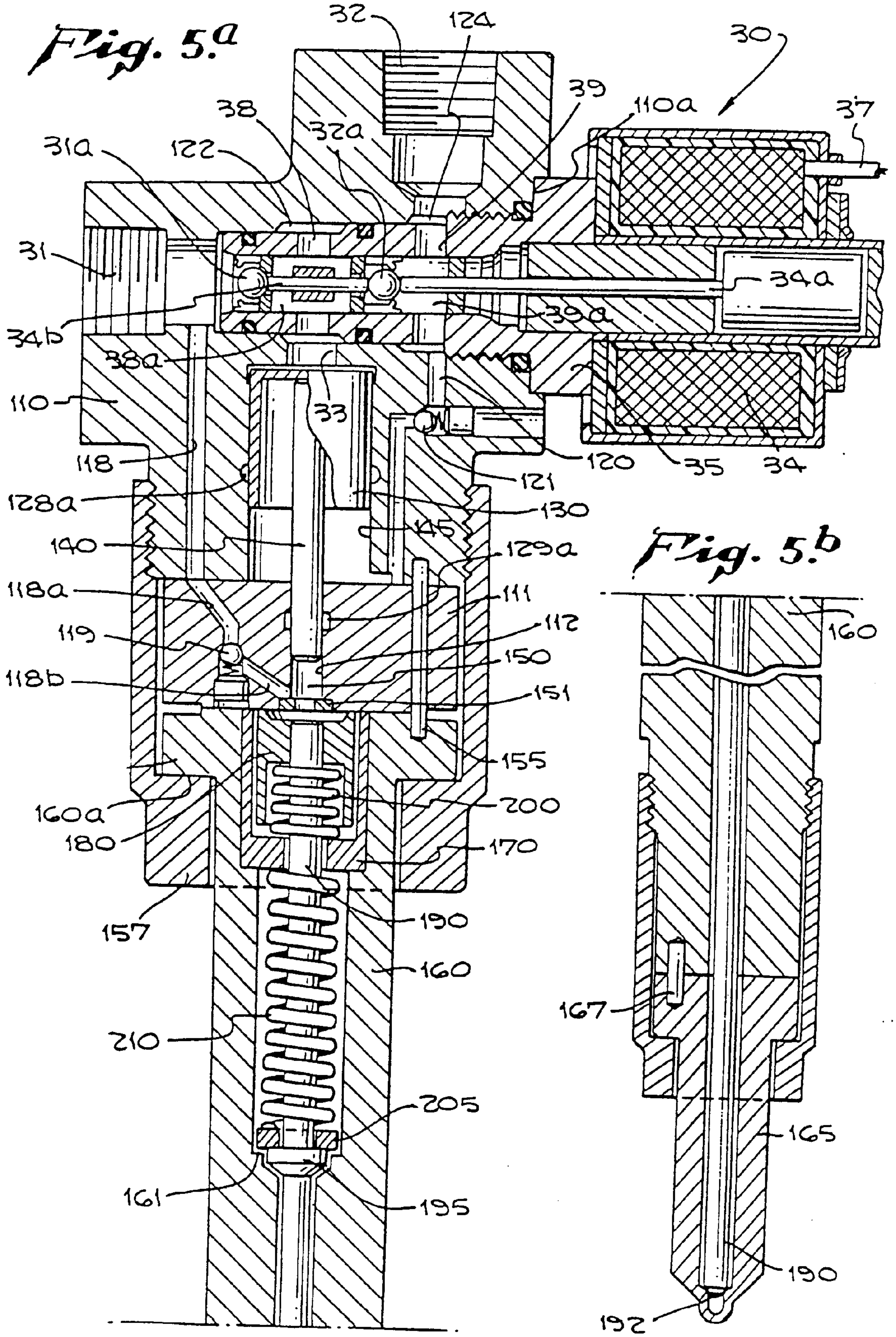
32
124
30
39
110a
37
38
32a
31a
122
31
34a
34b
39a
38a
33
110
120
35
34
118
121
128a
130
145
140
129a
118a
111
119
112
150
118b
151
155
160a
200
180
170
157
190
160
210
205
161
195
160
167
165
190
192

*Fig. 5.b*

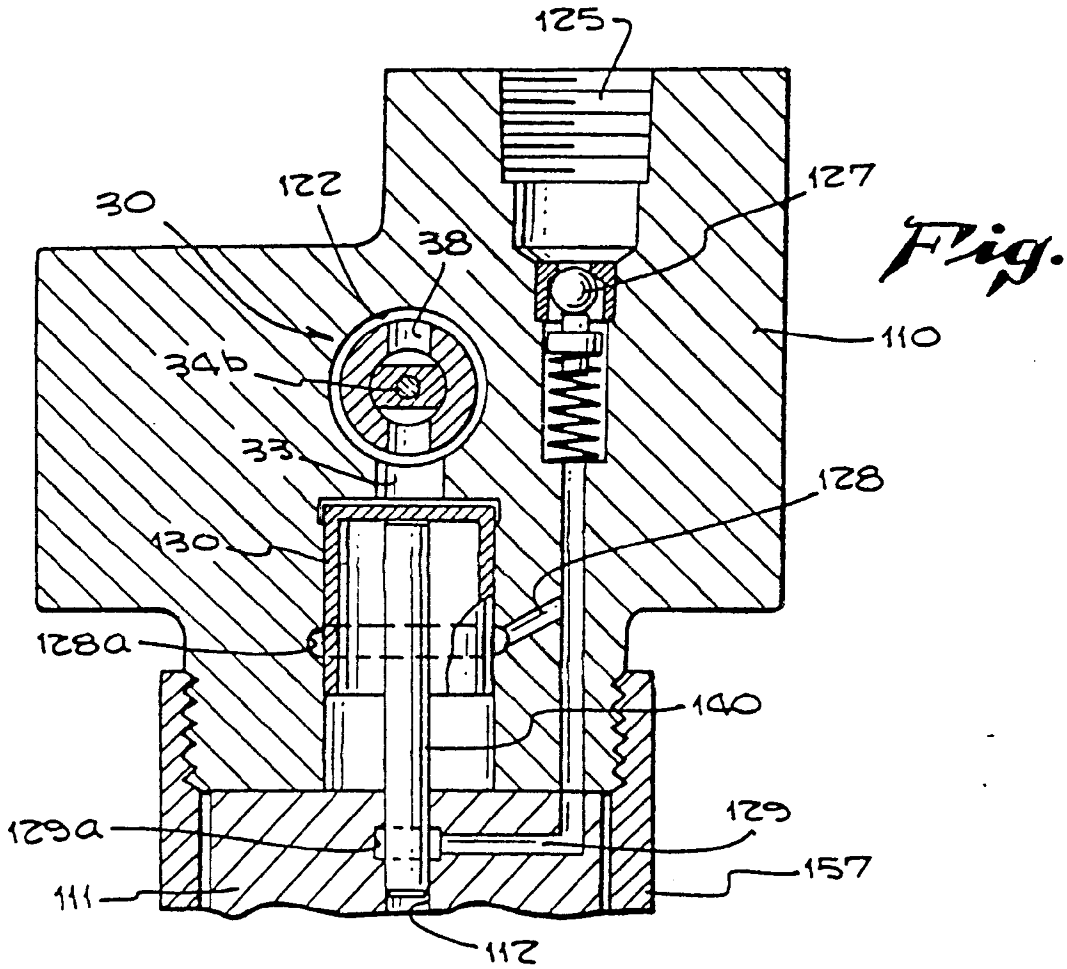


Fig. 6.

Fig. 7.

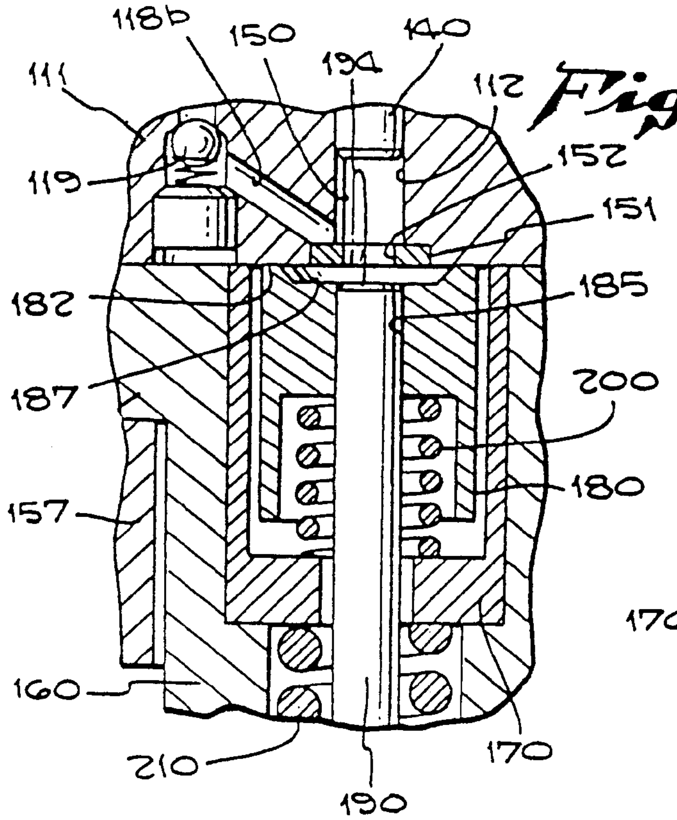


Fig. 8.

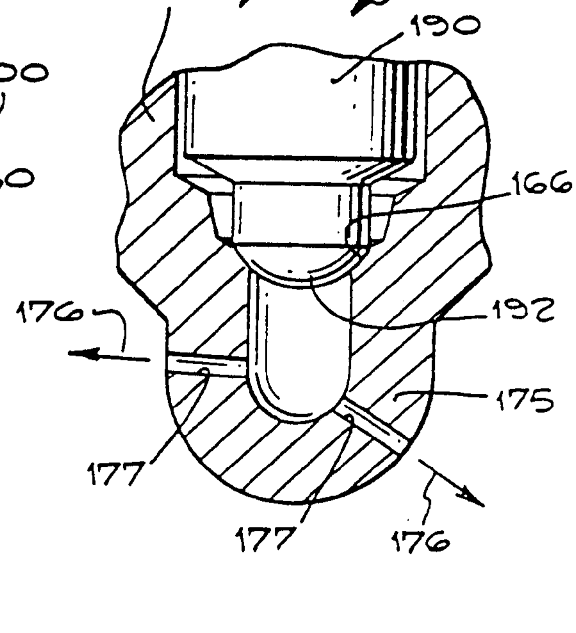

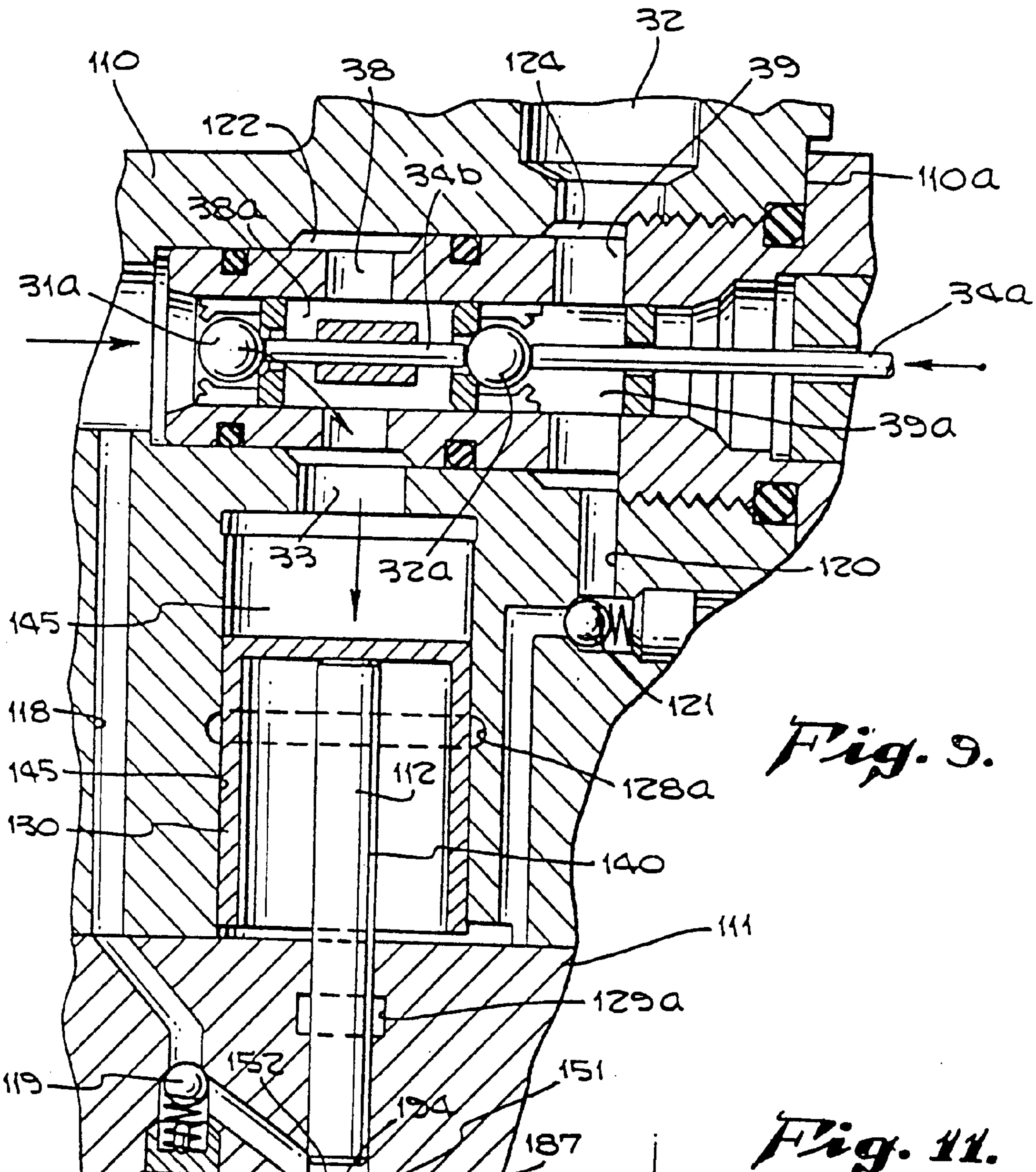
32
110
38
124
39
122
34b
110a
38a
31a
34a
39a
33
32a
120
145
121
118
128a
145
112
130
140
111
129a
119
152
151
194
187
182
160
180
185
160a
190
157
200
170
210

Fig. 9.

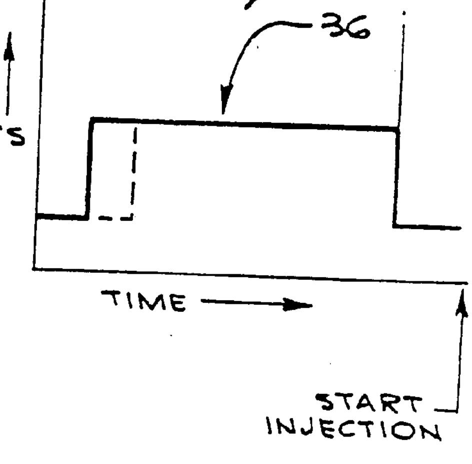
36
VOLTS
TIME
START
INJECTION

Fig. 11.

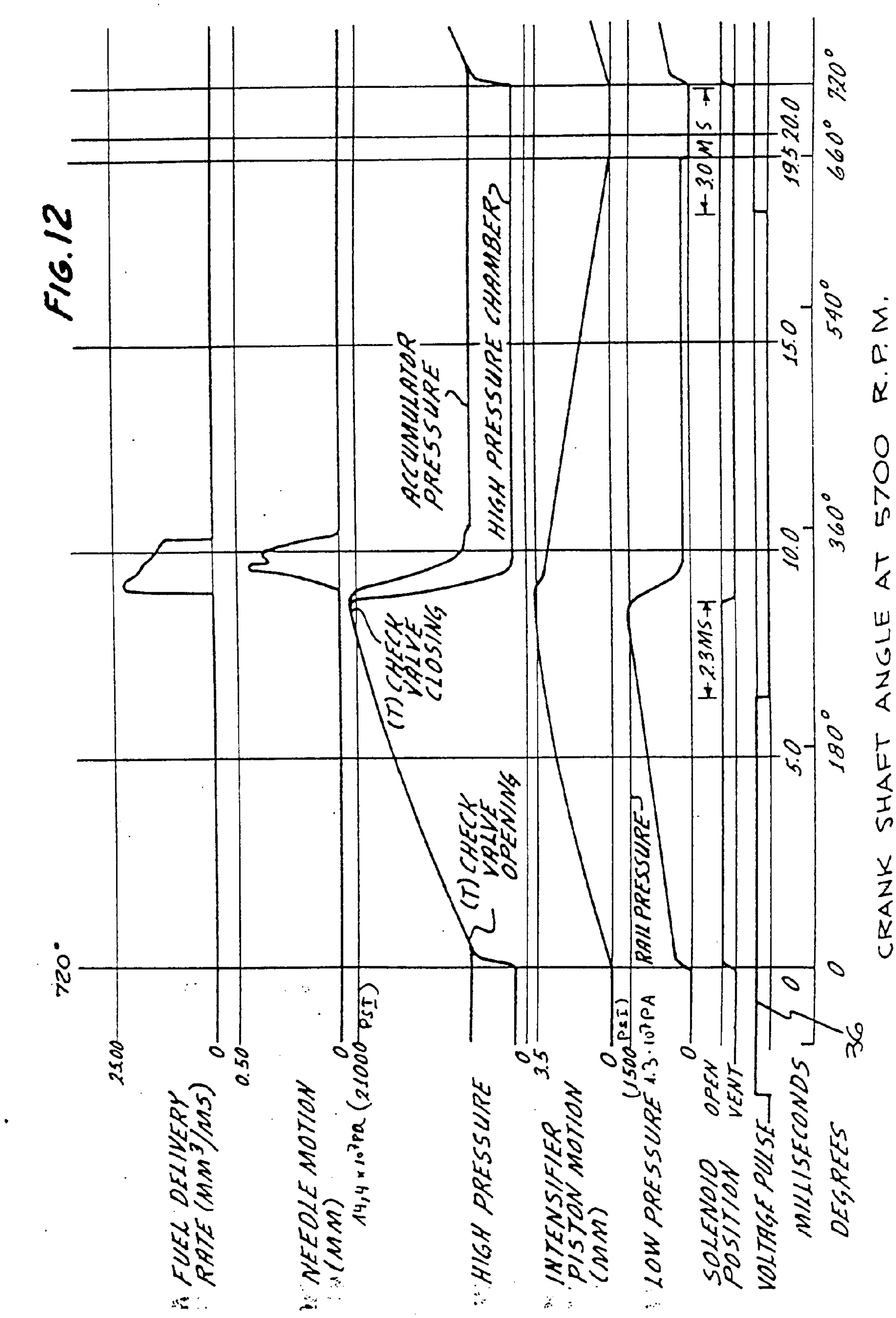
FUEL DELIVERY RATE (MM³/MS)
NEEDLE MOTION (MM)
14,4 × 10⁷PA (21000 PSI)
HIGH PRESSURE
INTENSIFIER PISTON MOTION (MM)
LOW PRESSURE
(1500 PSI) 1.3·10⁷PA
SOLENOID POSITION
OPEN
VENT
VOLTAGE PULSE
MILLISECONDS
DEGREES
25.00
0
0.50
0
0
3.5
0
0
0
36
720°
0
5.0
10.0
15.0
19.5 20.0
180°
360°
540°
660°
720°
(T) CHECK VALVE OPENING
(T) CHECK VALVE CLOSING
ACCUMULATOR PRESSURE
HIGH PRESSURE CHAMBER
RAIL PRESSURE
2.3 MS
3.0 MS
CRANK SHAFT ANGLE AT 5700 R.P.M.

FIG. 12

Fig. 13.

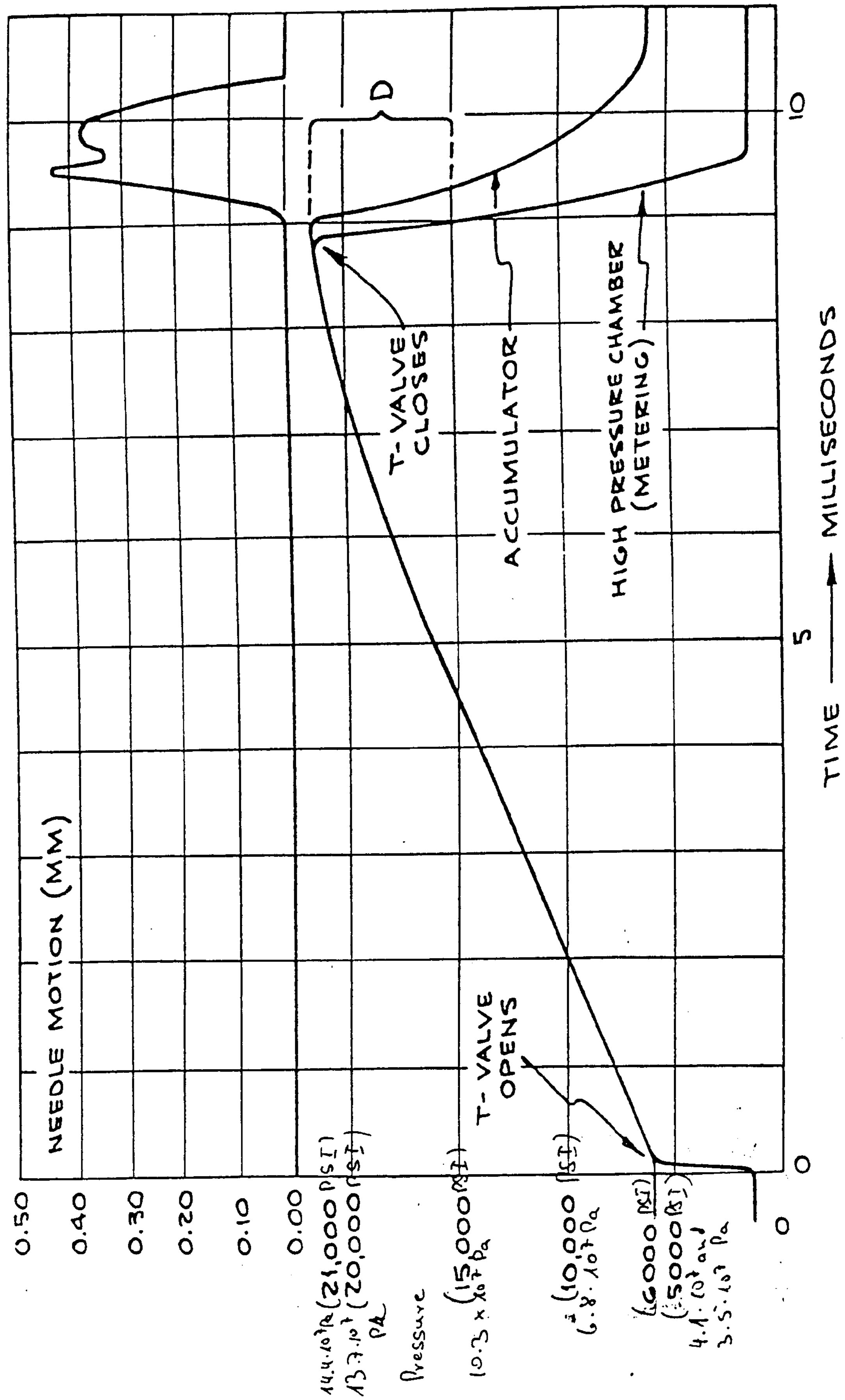
NEEDLE MOTION (MM)
0.50
0.40
0.30
0.20
0.10
0.00
D
T- VALVE CLOSES
T- VALVE OPENS
ACCUMULATOR
HIGH PRESSURE CHAMBER (METERING)
0
5
10
TIME ——→ MILLISECONDS
14.4·10⁷Pa (21,000 PSI)
13.7·10⁷ (20,000 PSI) Pa
Pressure
(15,000 PSI)
10.3 x 10⁷ Pa
(10,000 PSI)
6.8·10⁷ Pa
(6000 PSI)
(5000 PSI)
4.1·10⁷ and
3.5·10⁷ Pa